(19) Europäisches Patentamt / European Patent Office / Office européen des brevets

(11) **EP 4 516 744 B1**

(12) ## EUROPEAN PATENT SPECIFICATION

(45) Date of publication and mention
of the grant of the patent:
**10.09.2025 Bulletin 2025/37**

(21) Application number: **23202406.7**

(22) Date of filing: **09.10.2023**

(51) International Patent Classification (IPC):
***C01G 53/00*** (2025.01)

(52) Cooperative Patent Classification (CPC):
**C01G 53/42; C01G 53/50;** C01P 2002/72;
C01P 2004/61; Y02E 60/10

---

(54) **SODIUM ION BATTERY CATHODE MATERIAL AND PREPARATION METHOD THEREOF AND SODIUM ION BATTERY**

KATHODENMATERIAL FÜR NATRIUMIONENBATTERIE UND HERSTELLUNGSVERFAHREN DAFÜR UND NATRIUMIONENBATTERIE

MATÉRIAU DE CATHODE DE BATTERIE SODIUM-ION ET SON PROCÉDÉ DE PRÉPARATION ET BATTERIE SODIUM-ION

---

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.08.2023 CN 202311117897**

(43) Date of publication of application:
**05.03.2025 Bulletin 2025/10**

(73) Proprietor: **Beijing Easpring Material Technology Co., Ltd.**
**Beijing 100160 (CN)**

(72) Inventors:
• **CHEN, Feijiang**
**Beijing, 100160 (CN)**
• **LIU, Yafei**
**Beijing, 100160 (CN)**
• **CHEN, Yanbin**
**Beijing, 100160 (CN)**

(74) Representative: **Dragotti & Associati S.R.L.**
**Via Nino Bixio, 7**
**20129 Milano (IT)**

(56) References cited:
CN-B- 114 843 498        US-A1- 2016 293 945
US-A1- 2023 238 518

---

**Description**

**CROSS REFERENCE TO RELATED APPLICARTIONS**

The application claims benefit of the Chinese Patent Application No. "202311117897.1", filed August 31, 2023, entitled "sodium ion battery cathode material and preparation method thereof and sodium ion battery".

**FIELD**

The present disclosure relates to the technical field of sodium-ion batteries, in particular to a sodium ion battery cathode material, a preparation method thereof, and a sodium ion battery containing the sodium ion battery cathode material.

**BACKGROUND**

Lithium-ion batteries have been widely used in large quantities in the new energy vehicle industry in recent years along with the booming production and use of electric vehicles, however, the price of lithium resources is continuously and rapidly rising, it causes that the resource-rich and inexpensive sodium ion batteries have attracted the wide-spread attention, because the sodium ion battery techniques can dramatically reduce the costs of battery manufacture, and are expected to gain a large-scale application in the low-speed electric vehicles and energy storage fields.

In the sodium ion battery system, the layered oxide ($Na_xMO_2$, M = Ni, Fe, Mn, etc.) are currently the cathode materials that can balance the application requirements of the power impetus and energy storage battery and have advantages such as low cost, excellent low-temperature properties, high thermal stability, desirable safety performance, high energy density, and environmental friendliness. The layered oxide exhibit enormous potential in middle-low end passenger vehicles, energy storage batteries, and other markets.

However, the $Na_xMO_2$ material is not only very sensitive to air humidity, prone to absorb water and convert into other compounds, resulting in poor air stability, but also suffers from large volumetric change along with the $Na^+$ intercalation/de-intercalation structure during the charging and discharging process, which causes structural collapse and degraded cycle stability of the sodium ion batteries. Therefore, the present disclosure aims to investigate and solve the problem concerning how to overcome the above-mentioned deficiencies of the $Na_xMO_2$ material and improve air stability and structural stability.

CN114843498A discloses a sodium-containing oxide cathode material, showing specific cathode materials $Na_{0.8}(Mn_{0.4}Fe_{0.2}Ni_{0.2}Cu_{0.2})O_2$ (S1), $Na_1(Mn_{0.3}Fe_{0.1}Li_{0.1}Mg_{0.2}Co_{0.1}Ti_{0.2})O_2$ (S2), $Na_{0.6}(Mn_{0.2}Fe_{0.3}Ni_{0.1}Al_{0.1}Nb_{0.1}Y_{0.1}La_{0.1})O_2$ (S3), $Na_{0.85}(Mn_{0.28}Fe_{0.14}Ni_{0.14}Cu_{0.14}Ti_{0.1}Mg_{0.1}Co_{0.1})O_2$ (S9), $Na_{0.8}(Mn_{0.4}Fe_{0.2}Ni_{0.2}Cu_{0.2})O_2$ (S10), $Na_{0.8}(Mn_{0.4}Fe_{0.2}Ni_{0.2}Cu_{0.2})O_2$ (S11), $Na_{0.85}(Mn_{0.4}Fe_{0.2}Ni_{0.2}Cu_{0.2})O_2$ (S12), $Na_{0.8}(Mn_{0.36}Fe_{0.18}Ni_{0.18}Cu_{0.18})Ti_{0.1}O_2$ (S13), $Na_{0.8}(Mn_{0.38}Fe_{0.19}Ni_{0.19}Cu_{0.19})Nb_{0.05}O_2$ (S15) showing a compaction density between 3.0-3.1 $g/cm^3$ and their application in batteries.

US 2023/238518A1 discloses a layered-oxide positive electrode active material, having a molecular formula of $Na_xMn_aFe_bNi_cM_dN_eO_{2-\delta}Q_f$, where a doping element M is selected from at least of Cu, Li, Ti, Zr, K, Sb, Nb, Mg, Ca, Mo, Zn, Cr, W, Bi, Sn, Ge or Al, where a doping element N is selected from at least of Si, P, B, S or Se, where a doping element Q is selected from at least of F, Cl or N, $0.66 \leq x \leq 1$, $0 < a \leq 0.7$, $0 < b \leq 0.7$, $0 < c \leq 0.23$, $0 \leq d < 0.3$, $0 < e < 0.3$, $0 \leq f \leq 0.3$, $0 \leq \delta \leq 0.3$, $a+b+c+d+e=1$, $0 < e+f \leq 0.3$, $0 < (e+f)/a \leq 0.3$, $0.2 < d+e+f < 0.3$, and $(b+c)/a < 1.5$, and Example 9 discloses $Na_{0.9}Cu_{0.2}B_{0.02}Ti_{0.05}Ni_{0.1}Fe_{0.3}Mn_{0.33}O_2$. A space group of the layered-oxide positive electrode active material is R3m.

US 2016/293945A1 discloses a layered oxide material, having a molecular formula of $Na_xCu_iFe_jMn_kM_yO_{2+\beta}$, where M is an element that is doped for replacing the transition metals, and is specifically one or more of $Li^+$, $Ni^{2+}$, $Mg^{2+}$, $Mn^{2+}$, $Co^{2+}$, $Ca^{2+}$, $Ba^{2+}$, $Sr^{2+}$, $Mn^{3+}$, $Al^{3+}$, $B^{3+}$, $Cr^{3+}$, $Co^{3+}$, $V^{3+}$, $Zr^{4+}$, $Ti^{4+}$, $Sn^{4+}$, $V^{4+}$, $Mo^{4+}$, $Mo^{5+}$, $Ru^{4+}$, $Nb^{5+}$, $Si^{4+}$, $Sb^{3+}$, $Nb^{5+}$, $Mo^{6+}$, and $Te^{6+}$, and x, y, I, j, k and $\beta$ are respective the molar ratios of respective elements, provided that x, y, I, j, k and $\beta$ satisfy the relations: $y+i+j+k=1$, and $x+my+2i+3j+4k=2(2+\beta)$, where $0.8 \leq x \leq 1$, $0 < i < 0.3$; $0 \leq j \leq 0.5$, $0 < k < 0.5$, $-0.02 \leq \beta \leq 0.02$, and m is the valence of M, and Example 13 discloses $Na_{0.9}Cu_{0.2}Fe_{0.3}Mn_{0.43}Ni_{0.07}O_2$. The layered material has a space group R3m.

**SUMMARY**

The present disclosure intends to overcome the aforementioned technical problems and provides a sodium ion battery cathode material and a preparation method thereof, and a sodium ion battery, the cathode material has improved air stability and structural stability on the premise of ensuring a high volume energy density; in addition, a use of the cathode material in the sodium ion battery can effectively improve the electrochemical properties of the sodium ion battery.

In order to achieve the above objects, the first aspect of the present invention provides a sodium ion battery cathode material, in an X-Ray Diffraction (XRD) spectrogram of the cathode material, the characteristic diffraction peak A of (003) crystal plane and the characteristic diffraction peak B of (104) crystal plane are arranged at $2\theta$ of 15-19° and 39-44°, respectively;

wherein the microcrystalline size $D_A$ of the characteristic diffraction peak A and the microcrystalline size $D_B$ of the characteristic diffraction peak B satisfy the following condition: $1.3 \le D_A/D_B \le 2.5$, wherein $D_A$ and $D_B$ correspond to the microcrystalline sizes of the (003) crystal plane and the (104) crystal plane in the perpendicular line direction, respectively.

Unless otherwise specified in the present disclosure, the sodium ion battery cathode material is abbreviated as "cathode material".

The cathode material according to the present invention has an O3-type monocrystal structure, and the c value is selected from the range of 16-16.1 Å.

The cathode material according to the present invention has the composition represented by formula I: $Na_a(Ni_xFe_yMn_zM_mM'_n)O_2$ (I), in formula I, $0.93 \le a \le 1.03$, $0<x<0.5$, $0<y<0.5$, $0<z\le0.5$, $0<m<0.5$, $0\le n\le0.2$, $0.05<m+n<0.5$, m and n are not simultaneously 0, $x+y+z+m+n=1$; M and M' are each independently at least one element selected from the group consisting of Li, Cu, V, Cr, Sn, Zn, Al, Zr, Sr, Nb, Y, W, and La.

The second aspect of the present invention provides a method for preparing a sodium ion battery cathode material, comprising the following steps:

(1) pre-sintering a precursor having the composition represented by formula (II) $Ni_\alpha Fe_\beta Mn_\gamma M_\delta O_a H_b$ to obtain a pre-sintered precursor;

(2) mixing and calcinating the pre-sintered precursor, a Na source, and an optional M'-containing dopant to obtain a cathode material; wherein M and M' in the cathode material are not simultaneously 0;

wherein in formula II, $0<\alpha\le0.5$, $0<\beta\le0.5$, $0<\gamma\le0.5$, $0\le\delta\le0.5$, $1\le a\le2$, $0\le b\le2$, $\alpha+\beta+\gamma+\delta=1$, M and M' are each independently at least one element selected from the group consisting of Li, Cu, V, Cr, Sn, Zn, Al, Zr, Sr, Nb, Y, W, and La;

wherein the pre-sintering comprises first temperature rise stage, second temperature rise stage and heat preservation stage, the conditions of the first temperature rise stage comprise: raising the temperature to $T_1$ at a temperature-rise rate $v_1$ in an oxygen-depleted atmosphere having an oxygen concentration less than or equal to 10 vol%; the conditions of the second temperature rise stage comprise: raising the temperature to $T_2$ at a temperature-rise rate $v_2$ in an oxygen-depleted atmosphere having an oxygen concentration less than or equal to 20 vol%; the conditions of the heat preservation stage comprise: preserving heat within the temperature range of $(T_2-10)\le T\le(T_2+10)$ for a time t; wherein $v_1$ is selected from the range of 5-10°C/min, $v_2$ is selected from the range of 1-3°C/min, $T_1$ is selected from the range of 200-300°C, $T_2$ is selected from the range of 450-750°C; t is selected from the range of 3-10h.

The third aspect of the present invention provides a sodium ion battery comprising the cathode material provided in the first aspect or the cathode material produced with the method provided in the second aspect.

The present disclosure has the following advantages over the prior art:

(1) the cathode material provided by the present disclosure enhances the rate performance by defining that the cathode material has the characteristic diffraction peak A of (003) crystal plane and the characteristic diffraction peak B of (104) crystal plane and arranging the ratio $D_A/D_B$ within a reasonable range, so that $Na^+$ travels shorter distance during the charging and discharging process and can be transmitted in an easier manner; in addition, by defining a preferred range of the c value, the sodium layer spacing is guaranteed to be within a relatively small range, so that the normal intercalation/de-intercalation process of $Na^+$ is not influenced, and the ingress of water and carbon dioxide in air into the interlayer and reaction with Na are avoided, i.e., the cathode material not only has a high sodium ion mobility with significantly improved air stability, but also has a gradation design of precursor with wide distribution of large particles and small particles, which causes that the prepared cathode material has a significantly improved compaction density and improved volume energy density of the material;

(2) the preparation method of the present disclosure uses a specific pre-sintering process for the precursor having the composition represented by formula II (i.e., first temperature rise stage, second temperature rise stage, and heat preservation stage), improves the tap density of the precursor, can increase the production capacity, and may fully remove the water content contained in the precursor, solves the problem of different material phases of the precursor having various compositions, greatly facilitates the subsequent blending and calcination process; in addition, the treated pre-sintered precursor increases the porosity and specific surface area while maintaining its morphology, increases the reactivity, easily reacts fully with the sodium source during the subsequent compounding and calcination process, reduces the residual alkali on the cathode material surface, and improves the air stability.

The present disclosure also regulates and controls the compaction density, volume energy density, and structural stability of the cathode material by adjusting the particle size distribution and composition of the precursor and the doped elements of the dopant, and mitigating volume changes caused by the $Na^+$ intercalation/de-intercalation process.

In summary, the preparation method provided by the present disclosure causes the pre-sintered precursor to have a high density and a high reactivity, after the pre-sintered precursor is calcinated, the prepared cathode material exhibits a high air stability and desirable structural stability while maintaining a high volumetric energy density, and can overcome the problems of poor air stability and low cycle life of the existing layered oxide sodium ion battery cathode material.

**BRIEF DESCRIPTION OF THE DRAWINGS**

FIG. 1 is a Scanning Electron Microscope (SEM) spectrogram of the precursor produced in Example 1.
FIG. 2 is an SEM spectrogram of the pre-sintered precursor produced in Example 1.
FIG. 3 shows an SEM spectrogram of the O3-type monocrystal cathode material S1 produced in Example 1.
FIG. 4 illustrates an X-Ray Diffraction (XRD) pattern of the precursor produced in Example 1.
FIG. 5 illustrates an XRD pattern of the pre-sintered precursor produced in Example 1.
FIG. 6 shows an XRD pattern of the 03-type monocrystal cathode material S1 produced in Example 1.

**DETAILED DESCRIPTION**

The invention is set out in the appended set of claims. Any embodiment not falling under the scope of the appended claims does not form part of the invention.

Unless otherwise specified in the present disclosure, the expressions "first" and "second" neither represent the sequential order nor impose a limiting function on the materials or steps, the expressions are merely used for distinguishing or indicating that they are not the same materials or steps. For example, the terms "first temperature rise stage" and "second temperature rise stage" are used exclusively to indicate that they are not the same temperature rise stages.

The first aspect of the present disclosure provides a sodium ion battery cathode material, in an XRD spectrogram of the cathode material, the characteristic diffraction peak A of (003) crystal plane and the characteristic diffraction peak B of (104) crystal plane are arranged at 20 of 15-19° and 39-44°, respectively;

wherein the microcrystalline size $D_A$ of the characteristic diffraction peak A and the microcrystalline size $D_B$ of the characteristic diffraction peak B satisfy the following condition: $1.3 \leq D_A/D_B \leq 2.5$, wherein $D_A$ and $D_B$ correspond to the microcrystalline sizes of the (003) crystal plane and the (104) crystal plane in the perpendicular line direction, respectively.

Unless otherwise specified in the present disclosure, the microcrystalline structural features (e.g., $D_A$ and $D_B$) refer to the vertical distance from the crystal plane to the microcrystalline center. For example, $D_A$ denotes the vertical distance from the (003) crystal plane to the microcrystalline center; and $D_B$ denotes the vertical distance from the (104) crystal plane to the microcrystalline center.

In the present disclosure, the microcrystalline size is measured through the following method: the comprehensive analysis software JADE 6.5 for powder X-ray diffraction patterns is used, the powder X-ray diffraction patterns are measured and obtained from the powder X-ray diffraction, and the half-peak widths of the characteristic diffraction peak A appeared at the range of $20=15$-$19°$ and the characteristic diffraction peak B appeared at the range of $2\theta=39$-$44°$ are obtained respectively; the obtained half-peak widths are used for calculating the microcrystalline size $D_A$ and the microcrystalline size $D_B$ respectively according to the Scherrer formula.

In the present disclosure, the larger the $D_A/D_B$ ratio, it indicates the larger the size difference of the microcrystalline sizes in different directions, and the microcrystallite is grown anisotropically; if the $D_A/D_B$ ratio is closer to 1, it demonstrates that the microcrystalline sizes are proximate in different directions, the microcrystallite is grown isotropically. When the microcrystal volumes are the same, the degree of anisotropic growth of the microcrystallites will influence the sodium ion de-intercalation and the microcrystallite stability. Therefore, the present disclosure defines $1.3 \leq D_A/D_B \leq 2.5$, such that $Na^+$ travels a shorter distance during the charging and discharging process, and can be transmitted more easily, thereby improving the rate performance of the sodium ion battery.

According to the invention, the cathode material has an O3-type monocrystal structure, and the c value is selected from the range of 16-16.1 Å. In the present disclosure, by defining the c value range, indicating that the cathode material has a smaller interlayer spacing, the air-borne water and carbon dioxide enter the interlayer to react with Na when the material is exposed to an environment having a higher relative humidity is largely suppressed, and the air stability of the material is significantly improved.

In the present disclosure, the term "O3-type monocrystal structure" refers to the monocrystal cathode material with a crystalline form of 03-type, i.e., the cathode material has O3-type sodium electron layered oxide crystal cell structural parameters.

According to the invention, the characteristic diffraction peak A has a separate broad peak for an angle $2\theta$ within the range of 15-19°, and the characteristic diffraction peak B has a separate broad peak for an angle $2\theta$ within the range of 39-44°.

In some embodiments of the present disclosure, preferably, in an XRD spectrogram of the cathode material, the characteristic diffraction peak A has an angle 2θ within the range of 16.5±1°, and the characteristic diffraction peak B has an angle 2θ within the range of 41.5±1°.

In a specific embodiment of the present disclosure, when the cathode material is subjected to an X-ray diffraction assay by using CuKα rays, the microcrystalline size $D_A$ of the characteristic diffraction peak A having an angle 2θ within the range of 16.5±1° and the microcrystalline size $D_B$ of the characteristic diffraction peak B having an angle 2θ within the range of 41.5±1° satisfy the following condition: $1.3 \leq D_A/D_B \leq 2.5$.

In some embodiments of the present disclosure, the microcrystalline size $D_A$ of the characteristic diffraction peak A and the microcrystalline size $D_B$ of the characteristic diffraction peak B satisfy the following condition: $1.3 \leq D_A/D_B \leq 2.5$, e.g., 1.3, 1.5, 1.8, 2, 2.5, and a random value within the range consisting of any two numerical values thereof, preferably $1.3 \leq D_A/D_B \leq 2$. The numerical values satisfying the preferred ranges are more conducive to improving the volumetric energy density, air stability, and structural stability of the cathode material.

According to the invention, the cathode material has the composition represented by formula I: $Na_a(Ni_xFe_yMn_zM_mM'_n)O_2$ (I), in formula I, $0.93 \leq a \leq 1.03$, $0 < x < 0.5$, $0 < y < 0.5$, $0 < z \leq 0.5$, $0 < m < 0.5$, $0 \leq n \leq 0.2$, $0.05 < m+n < 0.5$, m and n are not simultaneously 0, x+y+z+m+n=1; M and M' are each independently at least one element selected from the group consisting of Li, Cu, V, Cr, Sn, Zn, Al, Zr, Sr, Nb, Y, W, and La.

In some embodiments of the present disclosure not according to the invention, in formula I, $0.85 \leq a \leq 1.05$; according to the invention, $0.93 < a < 1.03$.

In some embodiments of the present disclosure, further preferably, in formula I, M is at least one element selected from the group consisting of Cu, , V, Cr, Sn, Zn, Al, Zr, Nb, Y, W, and La, and M' is at least one element selected from the group consisting of Li, Al, Zr, Sr, La, Nb, and W; furthermore preferably, M and M' are different.

In some embodiments of the present disclosure, preferably, average partice size $D_{50}$ of the cathode material is within the range of 7-20μm, preferably within the range of 8-16μm, more preferably within the range of 9-12μm.

In the present disclosure, the cathode material has a wider particle size distribution. Preferably, the particle size distribution of the cathode material satisfies the following condition: $1.2 \leq (D_{90}-D_{10})/D_{50} \leq 1.8$, for example, 1.2, 1.4, 1.5, 1.6, 1.8, and a random value within the range consisting of any two numerical values thereof, preferably $1.4 \leq (D_{90}-D_{10})/D_{50} \leq 1.6$. The particle size distribution satisfying the preferred ranges are more conducive to improving the compaction density and volume energy density of the cathode material.

In some embodiments of the present disclosure, preferably, the compaction density of the cathode material is within the range of 3-3.6g/cm³, for example, 3g/cm³, 3.3g/cm³, 3.4g/cm³, 3.5g/cm³, 3.6g/cm³, and a random value within the range consisting of any two numerical values thereof, more preferably within the range of 3.3-3.6g/cm³.

In some embodiments of the present disclosure, preferably, the water increment of the cathode material satisfies the following condition: $0\% \leq (H_2O) \leq 120\%$, wherein $\Delta(H_2O)=H_2O(t_x-t_0)/H_2O(t_0)$, $0h < t_x \leq 6h$, $t_0=0h$; more preferably $0\% \leq \Delta(H_2O) \leq 100\%$.

In some embodiments of the present disclosure, preferably, the residual alkali conversion rate of the cathode material satisfies the following condition: $0\% \leq \Delta(Na_2CO_3+NaOH) \leq 200\%$, wherein $\Delta(Na_2CO_3+NaOH)=Na_2CO_3(t_x-t_0)/Na_2CO_3(t_0)+NaOH(t_x-t_0)/NaOH(t_0)$, $0h < t_x \leq 6h$, $t_0=0h$; more preferably $0\% \leq \Delta(Na_2CO_3+NaOH) \leq 150\%$.

When the cathode material has a large interlayer spacing, the water and carbon dioxide in the air can easily enter the laminate structure and react with Na, resulting in the increased water absorption quantity of the material, and the increased conversion quantities of $Na_2CO_3$ and NaOH, and the showing of the large shift forward of the (003) crystal plane diffraction peak. In the present disclosure, the cathode material provided by the present disclosure has a reasonable interlayer spacing, which ensures that the sodium ion intercalation/de-intercalation is easier, and can prevent the water and carbon dioxide in the air from entering the laminate structure, so that the water absorption in air is smaller, and the conversion quantities of $Na_2CO_3$ and NaOH are reduced. Therefore, the cathode material provided by the present disclosure has excellent air stability.

The second aspect of the present disclosure provides a method for preparing a sodium ion battery cathode material, comprising the following steps:

(1) pre-sintering a precursor having the composition represented by formula (II) $Ni_\alpha Fe_\beta Mn_\gamma M_\delta O_a H_b$ to obtain a pre-sintered precursor;

(2) mixing and calcinating the pre-sintered precursor, a Na source, and an optional M'-containing dopant to obtain a cathode material; wherein M and M' in the cathode material are not simultaneously 0;

wherein in formula II, $0 < \alpha \leq 0.5$, $0 < \beta \leq 0.5$, $0 < \gamma \leq 0.5$, $0 \leq \delta \leq 0.5$, $1 \leq a \leq 2$, $0 \leq b \leq 2$, $\alpha+\beta+\gamma+\delta=1$, M and M' are each independently at least one element selected from the group consisting of Li, Cu, , V, Cr, Sn, Zn, Al, Zr, Sr, Nb, Y, W, and La;

wherein the pre-sintering process comprises first temperature rise stage, second temperature rise stage and heat preservation stage, the conditions of the first temperature rise stage comprise: raising the temperature to $T_1$ at a temperature-rise rate $v_1$ in an oxygen-depleted atmosphere having an oxygen concentration less than or equal to 10 vol%; the conditions of the second temperature rise stage comprise: raising the temperature to $T_2$ at a temperature-rise rate $v_2$ in an oxygen-depleted atmosphere having an oxygen concentration less than or equal to 20 vol%; the conditions of the heat preservation stage comprise: preserving heat within the temperature range of $(T_2-10) \leq T \leq (T_2+10)$ for a time t; wherein $v_1$ is selected from the range of 5-10°C/min, $v_2$ is selected from the range of 1-3°C/min, $T_1$ is selected from the range of 200-300°C, $T_2$ is selected from the range of 450-750°C; t is selected from the range of 3-10h.

The present disclosure uses a specific pre-sintering process, and specifically defines the oxygen content, temperature-rise rate, temperature and time of the first temperature rise stage, the second temperature rise stage, and the heat preservation stage, increases the tap density of the precursor, can increases the production capacity, and can completely remove the water content contained in the precursor, solves the problems of different material phases of the precursor having various compositions, greatly facilitates the subsequent compounding and calcination process; in addition, the use of a specific pre-sintering process results in that the obtained pre-sintered precursor increases the porosity and the specific surface area while maintaining its morphology, enhances the reactivity, and is more conducive to the complete reaction with the sodium source during the subsequent compounding and calcination process, reduces the residual alkali on the cathode material surface, and improves the air stability.

Unless otherwise specified in the present disclosure, "M and M' in the cathode material are not simultaneously 0" means that in the preparation method for the cathode material, when the corner mark of M in the precursor having a composition represented by formula II is zero, the M'-containing dopant must be added; alternatively, when the M'-containing dopant is not added, the corner mark of M in the precursor having a composition represented by formula II is not zero; alternatively, when the corner mark of M in the precursor having a composition represented by formula II is not zero, the M'-containing dopant may be added or not.

In some embodiments of the present disclosure, preferable, the average partice size $D_{50}$ of the precursor is within the range of 7.5-8.5μm, and the particle size distribution satisfies the following condition: $1 \leq (D_{90}-D_{10})/D_{50} \leq 1.5$. When satisfying the above parameters, both the compaction density and the volumetric energy density of the cathode material are enhanced.

In some embodiments of the present disclosure, preferably, the precursor has a tap density within the range of 0.7-1.5g/cm$^3$ and a specific surface area within the range of 30-100m$^2$/g.

In the present disclosure, the primary particles of the precursor are uniformly and upright arranged in sheet form, and the surface is dense. When the precursor satisfies the above-mentioned ranges of the average particle size $D_{50}$, the particle size distribution, the tap density, and the specific surface area, the cathode material has the maximum compatibility of cycle stability and capacity.

The source of the precursor is selected from a wide range in the present disclosure, as long as the precursor has the composition represented by the above formula II. Preferably, the precursor is produced with the following method: subjecting a mixed metal salt solution containing a Ni source, a Fe source, an Mn source and an M source, a precipitant solution, and a complexing agent solution to co-precipitation reaction in a non-oxidizing atmosphere to obtain the precursor.

In the present disclosure, the non-oxidizing atmosphere includes but is not limited to, a nitrogen atmosphere, a helium atmosphere, an argon atmosphere, and the like, preferably a nitrogen atmosphere.

In some embodiments of the present disclosure, the used amounts of a Ni source, a Fe source, a Mn source and a M source in the mixed metal salt solution satisfy the condition n(Ni):n(Fe):n(Mn):n(M), wherein $0 \leq n(Ni) \leq 0.5$, $0 \leq n(Fe) \leq 0.5$, $0 \leq n(Mn) \leq 0.5$, $0 \leq n(M) \leq 0.5$.

In some embodiments of the present disclosure, the mixed metal salt solution has a concentration calculated in terms of the metal elements within the range of 1-5mol/L, preferably within the range of 1-3mol/L.

In a specific embodiment of the present disclosure, the Ni source is at least one selected from the group consisting of nickel sulfate, nickel nitrate, and nickel chlorate; the Fe source is at least one selected from the group consisting of iron sulfate, iron nitrate, and iron chlorate; the Mn source is at least one selected from the group consisting of manganese sulfate, manganese nitrate, and manganese chlorate, the M source is at least one selected from the group consisting of sulfates, nitrates, and chlorates comprising M, i.e., at least one selected from the group consisting of sulfates, nitrates, and chlorates comprising Li, Cu, V, Cr, Sn, Zn, Al, Zr, Sr, Nb, Y, W, and La; preferably at least one selected from the group consisting of sulfates, nitrates, and chlorates comprising Cu, V, Cr, Sn, Zn, Al, Zr, Nb, Y, W, and La.

In some embodiments of the present disclosure, the concentration of the precipitant solution is within the range of 3-10 mol/L. In the present disclosure, precipitant in the precipitant solution is selected from the conventional choices in the art, including but not limited to NaOH, KOH, LiOH, etc.

In some embodiments of the present disclosure, the concentration of the complexing agent is within the range of 2-11mol/L. In the present disclosure, complexing agent in the complexing agent solution is chosen from conventional choices in the art, including but not limited to ammonia water, ammonium bicarbonate, ammonium carbonate, citric acid, and disodium ethylenediaminetetraacetic acid.

According to some embodiments of the present disclosure, preferably, the co-precipitation method adopted in the co-precipitation reaction is a batch process and particularly comprises feeding the mixed metal salt solution comprising a Ni source, a Fe source, an Mn source and an M source, a precipitant solution, and a complexing agent solution into a reaction kettle during a certain period by using a metering pump, and completing the sufficient crystallization and growth of the precipitant in the reaction kettle and discharging the precipitant. Carrying out the co-precipitation reaction in a batch process is advantageous for obtaining a precursor having a wider particle size distribution.

In some embodiments of the present disclosure, preferably, the co-precipitation reaction conditions comprise a pH value of 10-12.5, a temperature of 40-80°C, a time of 48-120h, and a stirring speed of 100-800rpm.

In some embodiments of the present disclosure, preferably, the precursor and the pre-sintered precursor each independently have a spherical structure.

In the present disclosure, the co-precipitation reaction product is subjected to suction filtration, the obtained filter cake is subjected to drying at the temperature range of 100-140°C and sieved to obtain the precursor.

In some embodiments of the present disclosure, preferably, in step (1), the pre-sintered product is filtered, washed, and dried in sequence to obtain the pre-sintered precursor.

In some embodiments of the present disclosure, preferably, in step (2), the used amounts of the pre-sintered precursor and the Na source satisfy the condition $n(Ni+Fe+Mn+M):n(Na)=(0.8-1.1):1$, for example, 0.8:1, 0.85:1, 0.93:1, 0.95:1, 1:1, 1.03:1, 1.05:1, 1.1:1, and a random value within the range consisting of any two numerical values thereof, preferably satisfy the condition $n(Ni+Fe+Mn+M):n(Na)=(0.85-1.05):1$, more preferably satisfy the condition $n(Ni+Fe+Mn+M):n(Na)=(0.93-1.03):1$.

In some embodiments of the present disclosure, preferably, the Na source in step (2) is at least one selected from the group consisting of sodium carbonate, sodium hydroxide, sodium nitrate, and sodium oxide.

In some embodiments of the present disclosure, according to the invention, the dopant is at least one selected from the group consisting of oxides, phosphates, carbonates, fluorides, chlorides, hydroxides, and silicides that contain the M' element, i.e., at least one selected from the group consisting of sulfates, nitrates and chlorates containing Li, Cu, , V, Cr, , Sn, Zn, Al, Zr, Sr, Nb, Y, W, La; more preferably at least one selected from the group consisting of sulfates, nitrates and chlorates containing Li, Al, Zr, Sr, La, Nb, W, further preferably at least one selected from the group consisting of $Li_2CO_3$, $Al_2O_3$, $AlPO_4$, $AlCl_3$, , $ZrO$, $Zr(HPO_4)_2$, $ZrSi_2$, $Sr(OH)_2$, $SrCO_3$, $SrSi_2$, $SrF_2$, $SrCl_2$, $La_2O_3$, $Nb_2O_5$, , and $WO_3$.

In some embodiments of the present disclosure, preferably, in step (2), the calcination conditions comprise: a temperature selected from the range of 900-1,100°C; and a time selected from the range of 5-15h.

In some embodiments of the present disclosure, further preferably, the calcination process comprises temperature rise stage I, temperature rise stage II, and constant temperature stage, the difference between the oxygen concentration in the atmosphere of the temperature rise stage II and the oxygen concentration in the atmosphere of the temperature rise stage I is within the range of 10-100vol%, and the difference between the temperature-rise rate of the temperature rise stage I and the temperature rise rate of the temperature rise stage II is within the range of 2-15°C/min.

Unless otherwise specified in the present disclosure, the expression "the difference between the oxygen concentration in the atmosphere of the temperature rise stage II and the oxygen concentration in the atmosphere of the temperature rise stage I is within the range of 10-100vol%" means that the oxygen concentration in the atmosphere of the temperature rise stage II is higher than the oxygen concentration in the atmosphere of the temperature rise stage I, and the difference between the two oxygen concentrations is within the range of 10-100 vol.%; the expression "the difference between the temperature-rise rate of the temperature rise stage I and the temperature rise rate of the temperature rise stage II is within the range of 2-15°C/min" refers to that the temperature-rise rate of the temperature rise stage I is higher than the temperature-rise rate of the temperature rise stage II, and the difference between the two temperature-rise rate is within the range of 2-15°C/min.

In some embodiments of the present disclosure, preferably, the conditions of the temperature rise stage I comprise: raising the temperature to $T_1'$ at a temperature-rise rate $v_1'$ in an oxygen-depleted atmosphere having an oxygen concentration less than or equal to 10 vol%; the conditions of the temperature rise stage II comprise: raising the temperature to $T_2'$ at a temperature-rise rate $v_2'$ in an atmosphere having an oxygen concentration larger than or equal to 20 vol%; the conditions of the constant temperature stage comprise: preserving heat within the temperature range of $(T_2'-10)≤T'≤(T_2'+10)$ for a time t'; wherein $v_1'≥3°C/min$, $v_2'≤1°C/min$, $T_1'$ is selected from the range of 600-800°C, $T_2'$ is selected from the range of 900-1,100°C; t' is selected from the range of 5-15h.

In some embodiments of the present disclosure, preferably, in step (2), the method further comprises: sequentially cooling, crushing, and sieving the calcination product to obtain the cathode material.

In the present disclosure, the cathode material prepared with the method provided by the present disclosure has the composition represented by formula I: $Na_a(Ni_xFe_yMn_zM_mM'_n)O_2$ (I), in formula I, $0.93≤a≤1.03$, $0<x<0.5$, $0<y<0.5$, $0<z≤0.5$, , $0≤m≤0.5$, $0≤n≤0.2$, $0.05≤m+n≤0.5$, m and n are not simultaneously 0, $x+y+z+m+n=1$; M and M' are each independently at least one element selected from the group consisting of Li, Cu, V, Cr, Sn, Zn, Al, Zr, Sr, Nb, Y, W, and La; not according to the invention, in formula I, $0.85≤a≤1.05$; according to the invention M is at least one element selected from the group consisting of Cu, V, Cr, Sn, Zn, Al, Zr, Nb, Y, W, and La; and M' is at least one element selected from the group consisting of Li, Al, Zr, Sr, La, Nb, and W; $0.93 \leq a \leq 1.03$, M and M' are different.

The third aspect of the present disclosure provides a sodium ion battery containing the cathode material provided in the first aspect, or the cathode material produced with the method provided in the second aspect.

In the present disclosure, the use of the cathode material in the sodium ion battery can effectively improve the electrochemical properties of the sodium ion battery, especially the rate capability, the cycle stability, and the volume energy density.

The present disclosure will be described in detail below with reference to examples.

(1) The composition of each of the precursor, the pre-sintering precursor and the cathode material was measured by adopting an Inductively Coupled Plasma (ICP) method; the used instrument was PE Optima 7000DV, the test conditions were as follow: 0.1g of sample was completely dissolved in a mixed acid solution composed of 3mL of $HNO_3$ and 9mL of HCl, and the solution was diluted to 250mL for testing.

(2) The morphology of the material was observed by using a Scanning Electron Microscope (SEM), wherein the instrument was the SEM with a model S-4800 manufactured by the Hitachi Corporation of Japan.

(3) The particle sizes of the precursor and the cathode material were measured by using the Malvern particle size analyzer.

(4) The crystal structure of the cathode material was tested with the X-Ray Diffraction (XRD); the instrument was an X-ray diffractometer (manufactured by Rigaku Corporation in Japan, Smart Lab 9 KW), and the test conditions were as follow: the X-ray source was the Cu-Ka ray, the scanning range was 10°-80°, the scanning speed was 1.2°/min, and the sampling width was 0.02°.

(5) The compaction density of a cathode material was measured by a powder compaction method; the instrument in use was a powder compaction instrument (MCP-PD51) with the test condition of 20KN.

(6) The tap density of the precursor was measured by a fixed mass method; the specific surface area of the precursor was measured by adopting a BET specific surface area test method.

(7) The microcrystalline size ratio $D_A/D_B$ was determined by using the following method: a cathode material was filled into a dedicated substrate, and the half-spectrum measurement was performed using the Cu K$\alpha$ ray source under conditions consisting of two diffraction angle ranges $2\theta_A = 15\text{-}19°$ and $2\theta_B = 39\text{-}44°$, a sampling width of 0.02°, and a scanning speed of 1.2°/min, thereby obtaining the powder X-ray diffraction patterns of peak A and peak B, respectively; the comprehensive analysis software JADE 6.5 for powder X-ray diffraction patterns was used, the powder X-ray diffraction patterns were measured and obtained from the powder X-ray diffraction, and the half-peak widths of the characteristic diffraction peak A appeared at the range of $2\theta = 16.5 \pm 1°$ and the characteristic diffraction peak B appeared at the range of $2\theta = 41.5 \pm 1°$ were obtained respectively; the obtained half-peak widths were used for calculating the microcrystalline size $D_A$ and the microcrystalline size $D_B$ respectively according to the Scherrer formula, such that a microcrystalline size ratio was obtained.

(8) Electrochemical properties test: in the following Examples and Comparative Examples, electrochemical properties of the cathode materials were tested using the button-type sodium ion battery with the model R2025.

The preparation process of the sodium ion battery was as follows:

Preparing a cathode pole: sodium ion battery cathode material, conductive agent SuperP, and polyvinylidene fluoride (PVDF) were mixed according to a mass ratio of 90: 5: 5 and sufficiently blended with a suitable amount of N-methylpyrrolidone (NMP) to form a uniform slurry, the slurry was coated on an aluminum foil and dried at 120°C for 12h, the coated aluminum foil was then subjected to punch forming under the pressure of 100MPa to prepare the cathode pole with a diameter of 12mm and a thickness of 120μm.

Assembling the battery: a cathode pole, a diaphragm, an anode pole, and an electrolyte were assembled in an argon gas-filled glove box with water content and oxygen content less than 5ppm, to assemble the button type sodium ion battery with the model R2025, the sodium ion battery was subjected to standing still for 6h. Wherein the anode pole was a metal sodium piece with a diameter of 14mm and a thickness of 1mm; the diaphragm was a gummed diaphragm with a thickness of 25μm; the electrolyte was a mixed solution of $NaPF_6$ with a concentration of 1 mol/L, Ethyl Methyl Carbonate (EMC) and Propylene Carbonate (PC) at a ratio of 4:6.

Testing of the electrochemical properties:

In the following Examples and Comparative Examples, the testing of electrochemical properties was performed on the button-type sodium-ion battery with the model R2025 by using the Shenzhen Neware Battery Test System (CT 3008), the testing conditions of the first charge and discharge capacity were as follow: 0.1C@2-4.0V, 25°C, and a constant voltage cutoff current was 0.02C; the testing conditions of the cycle stability were as follow: 1.0C@2-4.0V, 25°C. The button-type sodium-ion battery was subjected to the constant current charge and discharge test at the current of 0.1C and 1C, the charge-discharge specific capacity, the cycle stability, and the volume energy density of the sodium ion battery cathode material were evaluated; wherein the higher was the capacity retention rate in the cycle process, it indicated that the material stability was the higher, and the cycle stability of a battery system was the better.

Example 1

S1: nickel sulfate, ferric sulfate, manganese sulfate, and copper sulfate were dissolved according to the molar ratio of nickel, iron, manganese, and copper elements being 20: 30: 40: 10 to obtain a mixed metal salt solution having a concentration of 2mol/L; sodium hydroxide was dissolved into a precipitator solution with the concentration of 8 mol/L; ammonia water was dissolved into a complexing agent solution with the concentration of 10.4 mol/L;

100L of the mixed metal salt solution, the precipitator solution, and the complexing agent solution were introduced into a reaction kettle in a concurrent flow mode to carry out co-precipitation reaction, the precipitate was then continuously controlled to grow in an overflow device under the protection of argon gas atmosphere until an average particle size of the particles grew to 8μm; the precursor slurry was subjected to the suction filtration and washing, the filter cake was dried at 120°C and then sieved to obtain the precursor (both the composition and the physical property parameters of the precursor were listed in Table 1);

wherein the co-precipitation reaction conditions comprised a temperature of 60°C and a pH of 12.38;

S2: the precursor was pre-sintered, and the obtained pre-sintered product was naturally cooled to obtain a pre-sintered precursor (the composition was shown in Table 1);

the conditions of the first temperature rise stage comprised: the temperature was raised from 25°C to $T_1$=250°C at a temperature-rise rate $v_1$=6°C/min in an oxygen-depleted atmosphere having an oxygen concentration of 10 vol%;

the conditions of the second temperature rise stage comprised: the temperature was raised from 250°C to $T_2$=550°C at a temperature-rise rate $v_2$=2°C/min in an atmosphere having an oxygen concentration of 20 vol%;

the conditions of the heat preservation stage comprised: the heat preservation was performed within the temperature range of T=540-560°C for a time t=4h;

S3: the pre-sintered precursor and $Na_2CO_3$ were subjected to calcinating, cooling, crushing, and sieving to obtain O3-type monocrystal cathode material S1 (the composition, crystal form, and physical property parameters were listed in Table 1);

the used amounts of the pre-sintered precursor and the Na source satisfied n(Ni+Fe+Mn+Cu):n(Na)=1:0.96;

the conditions of the temperature rise stage I comprised: the temperature was raised from 25°C to $T_1$'=700°C at a temperature-rise rate $v_1$'=3°C/min in an oxygen-depleted atmosphere having an oxygen concentration of 10 vol%;

the conditions of the temperature rise stage II comprised: the temperature was raised from 700°C to $T_2$'=950°C at a temperature-rise rate $v_2$'=1°C/min in an atmosphere having an oxygen concentration of 20 vol%;

the conditions of the constant temperature stage comprised: the heat preservation was performed at the temperature T'=950°C for a time t'=15h.

Example 2

The cathode material was prepared according to the same method as that in Example 1, except that

in step S2, the temperature $T_2$=450°C in the second temperature rise stage; the temperature T=440-460°C in the heat preservation stage;

the remaining conditions were identical, such that the O3-type monocrystal cathode material S2 was obtained.

Example 3

The cathode material was prepared according to the same method as that in Example 1, except that

in step S3, the pre-sintered precursor, $Na_2CO_3$ and $Al_2O_3$ were subjected to calcinating, cooling, crushing, and sieving to obtain 03-type monocrystal cathode material S3 (the composition, crystal form, and physical property parameters were listed in Table 1);

the used amount of the $Al_2O_3$ satisfied n(Al):n(Ni+Fe+Mn+Cu+Al)=0.05.

the remaining conditions were identical, such that the O3-type monocrystal cathode material S3 was obtained.

Example 4

The cathode material was prepared according to the same method as that in Example 1, except that

in step S2, the time t =10h in the heat preservation stage;
the remaining conditions were identical, such that the O3-type monocrystal cathode material S4 was obtained.

Example 5

The cathode material was prepared according to the same method as that in Example 1, except that

in step S2, the temperature-rise rate $v_1$=10°C/min in the first temperature rise stage, and the temperature-rise rate $v_2$=1°C/min in the second temperature rise stage;
the remaining conditions were identical, such that the O3-type monocrystal cathode material S5 was obtained.

Example 6

The cathode material was prepared according to the same method as that in Example 1, except that

in step S1, the crystal growth of the precipitate was regulated and controlled such that the partice size distribution of the precursor satisfied the following condition: $K_{90}$=$(D_{90}-D_{10})/D_{50}$=1;
the remaining conditions were identical, such that the O3-type monocrystal cathode material S6 was obtained.

Example 7

The cathode material was prepared according to the same method as that in Example 1, except that

in step S1, nickel sulfate, ferric sulfate, manganese sulfate, and copper sulfate were dissolved according to the molar ratio of nickel, iron, manganese, and copper elements being 22: 25: 42: 11 to obtain a mixed metal salt solution having a concentration of 2mol/L;
the remaining conditions were identical, such that the O3-type monocrystal cathode material S7 was obtained.

Example 8

The cathode material was prepared according to the same method as that in Example 1, except that

in step S1, the crystal growth of the precipitate was regulated and controlled such that the partice size distribution of the precursor satisfied the following condition: $K_{90}$=$(D_{90}-D_{10})/D_{50}$=0.8;
the remaining conditions were identical, such that the O3-type monocrystal cathode material S8 was obtained.

Comparative Example 1

The cathode material was prepared according to the same method as that in Example 1, except that the step S2 was not performed,

that is, the precursor obtained in step S1 was directly subjected to the calcination treatment in step S3,
the remaining conditions were identical, such that the O3-type monocrystal cathode material DS1 was obtained.

Comparative Example 2

The cathode material was prepared according to the same method as that in Example 1, except that

in step S2, the temperature $T_2$=300°C in the second temperature rise stage; the temperature T=290-310°C in the heat preservation stage;
the remaining conditions were identical, such that the O3-type monocrystal cathode material DS2 was obtained.

Comparative Example 3

The cathode material was prepared according to the same method as that in Example 1, except that

in step S2, the temperature $T_2$=1,000°C in the second temperature rise stage; the temperature T=990-1,010°C in the heat preservation stage;

the remaining conditions were identical, such that the O3-type monocrystal cathode material DS3 was obtained.

Comparative Example 4

The cathode material was prepared according to the same method as that in Example 1, except that

in step S2, the time t =1h in the heat preservation stage;
the remaining conditions were identical, such that the O3-type monocrystal cathode material DS4 was obtained.

Comparative Example 5

The cathode material was prepared according to the same method as that in Example 1, except that

in step S2, the temperature-rise rate $v_2$=10°C/min in the second temperature-rise stage;
the remaining conditions were identical, such that the O3-type monocrystal cathode material DS5 was obtained.

Comparative Example 6

The cathode material was prepared according to the same method as that in Example 1, except that

in step S2, there was not the first temperature rise stage, i.e., the precursor was directly heated from the temperature of 25°C to $T_2$=550°C at a temperature-rise rate $v_2$=2°C/min in an atmosphere with an oxygen concentration of 20vol%, and the heat preservation was then performed at the temperature range T = 540-560°C for a time t =4h;
the remaining conditions were identical, such that the O3-type monocrystal cathode material DS6 was obtained.

Table 1

| | | Precursor | | |
|---|---|---|---|---|
| | | Composition | Average particle size $D_{50}$, $\mu$m | $K_{90}$ | Tap density, g/cm$^3$ |
| | Example 1 | 1/4(Ni$_{0.2}$Fe$_{0.3}$Mn$_{0.4}$Cu$_{0.1}$)OOH@ 3/4(Ni$_{0.2}$Fe$_{0.3}$Mn$_{0.4}$CU$_{0.1}$)O$_{4/3}$ compound phase | 8 | 1.5 | 1.3 |
| | Example 2 | | | | |
| | Example 3 | | | | |
| | Example 4 | | | | |
| | Example 5 | | | | |
| | Example 6 | | 8 | 1 | 1.0 |
| | Example 7 | 1/4(Ni$_{0.22}$Fe$_{0.25}$Mn$_{0.4}$Cu$_{0.11}$)OOH@ 3/4(Ni$_{0.22}$Fe$_{0.25}$Mn$_{0.42}$Cu$_{0.11}$)O$_{4/3}$ compound phase | 8 | 1.5 | 1.3 |
| | Example 8 | | 8 | 0.8 | 0.8 |
| | Comparative Example 1 | 1/4(Ni$_{0.2}$Fe$_{0.3}$Mn$_{0.4}$Cu$_{0.1}$)OOH@ 3/4(Ni$_{0.2}$Fe$_{0.3}$Mn$_{0.4}$CU$_{0.1}$)O$_{4/3}$ compound phase | 8 | 1.5 | 1.3 |
| | Comparative Example 2 | | | | |
| | Comparative Example 3 | | | | |
| | Comparative Example 4 | | | | |
| | Comparative Example 5 | | | | |
| | Comparative Example 6 | | | | |
| Note: $K_{90}$=(D$_{90}$-D$_{10}$)/D$_{50}$. | | | | | |

Table 1 (continued)

| | Pre-sintering | | | | | |
|---|---|---|---|---|---|---|
| | $v_1$, °C/min | $T_1$, °C | $v_2$, °C/min | $T_2$, °C | T, °C | t, h |
| Example 1 | 6 | 250 | 2 | 550 | 540-560 | 4 |
| Example 2 | 6 | 250 | 2 | 450 | 440-450 | 4 |
| Example 3 | 6 | 250 | 2 | 550 | 540-560 | 4 |
| Example 4 | 6 | 250 | 2 | 550 | 540-560 | 10 |
| Example 5 | 10 | 250 | 1 | 550 | 540-560 | 4 |
| Example 6 | 6 | 250 | 2 | 550 | 540-560 | 4 |
| Example 7 | 6 | 250 | 2 | 550 | 540-560 | 4 |
| Example 8 | 6 | 250 | 2 | 550 | 540-560 | 4 |
| Comparative Example 1 | - | - | - | - | - | - |
| Comparative Example 2 | 6 | 250 | 2 | 300 | 290-310 | 4 |
| Comparative Example 3 | 6 | 250 | 2 | 1000 | 990-1010 | 4 |
| Comparative Example 4 | 6 | 250 | 2 | 550 | 540-560 | 1 |
| Comparative Example 5 | 6 | 250 | 10 | 550 | 540-560 | 4 |
| Comparative Example 6 | - | - | 2 | 550 | 540-560 | 4 |

| | Pre-sintered precursor | $n(Na)_1$ | $n(Dopant)^2$ |
|---|---|---|---|
| Example 1 | $(Ni_{0.2}Fe_{0.3}Mn_{0.4}Cu_{0.1})_3O_4$ | 0.96 | - |
| Example 2 | $(Ni_{0.2}Fe_{0.3}Mn_{0.4}Cu_{0.1})_3O_4$ | 0.96 | - |
| Example 3 | $(Ni_{0.2}Fe_{0.3}Mn_{0.4}Cu_{0.1})_3O_4$ | 0.96 | 0.05 |
| Example 4 | $(Ni_{0.2}Fe_{0.3}Mn_{0.4}Cu_{0.1})_3O_4$ | 0.96 | - |
| Example 5 | $(Ni_{0.2}Fe_{0.3}Mn_{0.4}Cu_{0.1})_3O_4$ | 0.96 | - |
| Example 6 | $(Ni_{0.2}Fe_{0.3}Mn_{0.4}Cu_{0.1})_3O_4$ | 0.96 | - |
| Example 7 | $(Ni_{0.22}Fe_{0.25}Mn_{0.42}Cu_{0.11})_3O_4$ | 0.96 | - |
| Example 8 | $(Ni_{0.2}Fe_{0.3}Mn_{0.4}Cu_{0.1})_3O_4$ | 0.96 | - |
| Comparative Example 1 | - | 0.96 | - |
| Comparative Example 2 | $1/5(Ni_{0.2}Fe_{0.3}Mn_{0.4}Cu_{0.1})OOH@$ $4/5(Ni_{0.2}Fe_{0.3}Mn_{0.4}Cu_{0.1})O_{4/3}$ compound phase | 0.96 | - |
| Comparative Example 3 | $(Ni_{0.2}Fe_{0.3}Mn_{0.4}Cu_{0.1})_3O_4$ | 0.96 | - |
| Comparative Example 4 | $1/6(Ni_{0.2}Fe_{0.3}Mn_{0.4}Cu_{0.1})OOH@$ $5/6(Ni_{0.2}Fe_{0.3}Mn_{0.4}Cu_{0.1})O_{4/3}$ compound phase | 0.96 | - |
| Comparative Example 5 | $(Ni_{0.2}Fe_{0.3}Mn_{0.4}Cu_{0.1})_3O_4$ | 0.96 | - |
| Comparative Example 6 | $(Ni_{0.2}Fe_{0.3}Mn_{0.4}Cu_{0.1})_3O_4$ | 0.96 | - |

Note: 1 - means that the used amounts of the Na source and the pre-sintered precursor satisfy n(Na):n(Ni+Fe+Mn+Cu); 2 - means that the used amounts of the dopant satisfies n(M'):n(Ni+Fe+Mn+M+M').

Table 1 (continued)

| | Cathode material | | |
|---|---|---|---|
| | Composition | $D_A/D_B$ | C, Å |
| Example 1 | $O3-Na_{0.96}Ni_{0.2}Fe_{0.3}Mn_{0.4}Cu_{0.1}O_2$ | 1.37 | 16.0641 |

(continued)

| | Cathode material | | |
| --- | --- | --- | --- |
| | Composition | $D_A/D_B$ | C, Å |
| Example 2 | O3-$Na_{0.96}Ni_{0.2}Fe_{0.3}Mn_{0.4}Cu_{0.1}O_2$ | 1.58 | 16.0524 |
| Example 3 | O3-$Na_{0.96}[(Ni_{0.2}Fe_{0.3}Mn_{0.4}Cu_{0.1})_{0.95}Al_{0.05}]O_2$ | 1.53 | 16.0731 |
| Example 4 | O3-$Na_{0.96}Ni_{0.2}Fe_{0.3}Mn_{0.4}Cu_{0.1}O_2$ | 1.77 | 16.0525 |
| Example 5 | O3-$Na_{0.96}Ni_{0.2}Fe_{0.3}Mn_{0.4}Cu_{0.1}O_2$ | 1.62 | 16.0413 |
| Example 6 | O3-$Na_{0.96}Ni_{0.2}Fe_{0.3}Mn_{0.4}Cu_{0.1}O_2$ | 1.31 | 16.0417 |
| Example 7 | O3-$Na_{0.96}Ni_{0.22}Fe_{0.25}Mn_{0.42}Cu_{0.11}O_2$ | 1.58 | 16.0617 |
| Example 8 | O3-$Na_{0.96}Ni_{0.2}Fe_{0.3}Mn_{0.4}Cu_{0.1}O_2$ | 1.49 | 16.0626 |
| Comparative Example 1 | O3-$Na_{0.96}Ni_{0.2}Fe_{0.3}Mn_{0.4}Cu_{0.1}O_2$ | 1.11 | 16.1311 |
| Comparative Example 2 | O3-$Na_{0.96}Ni_{0.2}Fe_{0.3}Mn_{0.4}Cu_{0.1}O_2$ | 0.96 | 16.1141 |
| Comparative Example 3 | O3-$Na_{0.96}Ni_{0.2}Fe_{0.3}Mn_{0.4}Cu_{0.1}O_2$ | 1.05 | 16.1271 |
| Comparative Example 4 | O3-$Na_{0.96}Ni_{0.2}Fe_{0.3}Mn_{0.4}Cu_{0.1}O_2$ | 1.05 | 16.1132 |
| Comparative Example 5 | O3-$Na_{0.96}Ni_{0.2}Fe_{0.3}Mn_{0.4}Cu_{0.1}O_2$ | 1.12 | 16.1153 |
| Comparative Example 6 | O3-$Na_{0.96}Ni_{0.2}Fe_{0.3}Mn_{0.4}Cu_{0.1}O_2$ | 1.21 | 16.1251 |

| | Cathode material | | | | |
| --- | --- | --- | --- | --- | --- |
| | $D_A$, nm | $D_B$, nm | $D_{50}$, μm | Compaction density, g/cm$^3$ | $K_{90}$ |
| Example 1 | 57.8 | 42.4 | 8.0 | 3.55 | 1.4 |
| Example 2 | 59.4 | 37.6 | 8.0 | 3.42 | 1.4 |
| Example 3 | 58.3 | 38.1 | 8.0 | 3.39 | 1.4 |
| Example 4 | 60.2 | 34.0 | 8.0 | 3.40 | 1.4 |
| Example 5 | 59.7 | 36.9 | 8.0 | 3.38 | 1.4 |
| Example 6 | 57.2 | 43.7 | 8.0 | 3.24 | 1.1 |
| Example 7 | 59.4 | 37.6 | 8.0 | 3.54 | 1.4 |
| Example 8 | 58.1 | 39.0 | 8.0 | 3.18 | 0.9 |
| Comparative Example 1 | 55.3 | 49.8 | 8.0 | 3.23 | 1.4 |
| Comparative Example 2 | 56.1 | 58.4 | 8.0 | 3.21 | 1.4 |
| Comparative Example 3 | 55.5 | 52.9 | 8.0 | 3.21 | 1.4 |
| Comparative Example 4 | 55.5 | 52.9 | 8.0 | 3.20 | 1.4 |
| Comparative Example 5 | 55.4 | 49.5 | 8.0 | 3.21 | 1.4 |
| Comparative Example 6 | 54.5 | 45.0 | 8.0 | 3.27 | 1.4 |

As can be seen from the results of Table 1, in comparison with Comparative Examples 1-6, the cathode materials in Examples 1-8 produced with the method provided by the present disclosure satisfy the following conditions: $1.3 \leq D_A/D_B \leq 2.5$, particularly $1.3 \leq D_A/D_B \leq 2$, and the c value is selected from the range of 16-16.1 Å.

In comparison to Example 8, Examples 1-7 regulate and control the particle size distribution of the precursors to satisfy the following condition: $1 \leq (D_{90}-D_{10})/D_{50} \leq 1.5$, thereby more effectively increasing the compaction density of the cathode materials, and the volumetric energy density of the electrodes made from the cathode materials.

Test Examples

(1)Morphology test

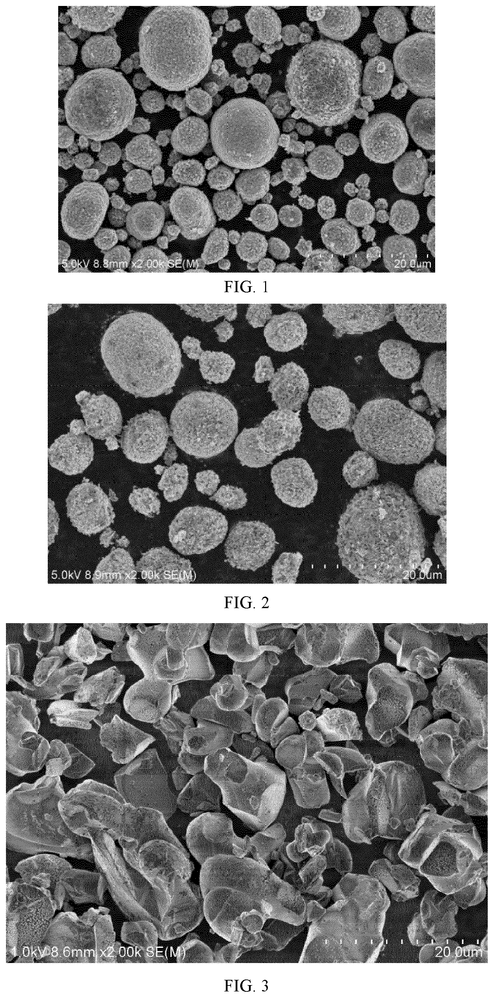

The present disclosure tested the scanning electron microscope images of the precursors, the pre-sintered precursors, and the O3-type monocrystal cathode materials prepared in the above Examples and Comparative Examples, and exemplarily provided the SEM images of the precursor, the pre-sintered precursor and the O3-type monocrystal cathode material S1 prepared in Example 1, the results were as shown in FIGs. 1-3, respectively, as can be seen from FIG. 1, the particle size distribution of the precursor particles was wide, and the surface of the large and small particles was dense; as illustrated by FIG. 2, the pre-sintered precursor still maintained the spherical shape and the wide distribution of the precursor, and its surface was more rounded and dense; as shown by FIG. 3, the surface of the large and small monocrystal particles of the O3-type monocrystal cathode material S1 was smooth and rounded, and the particle size distribution was wider, the small particles were filled between the large particles, and exhibited the desirable gradation performance.

(2) Test of physical properties

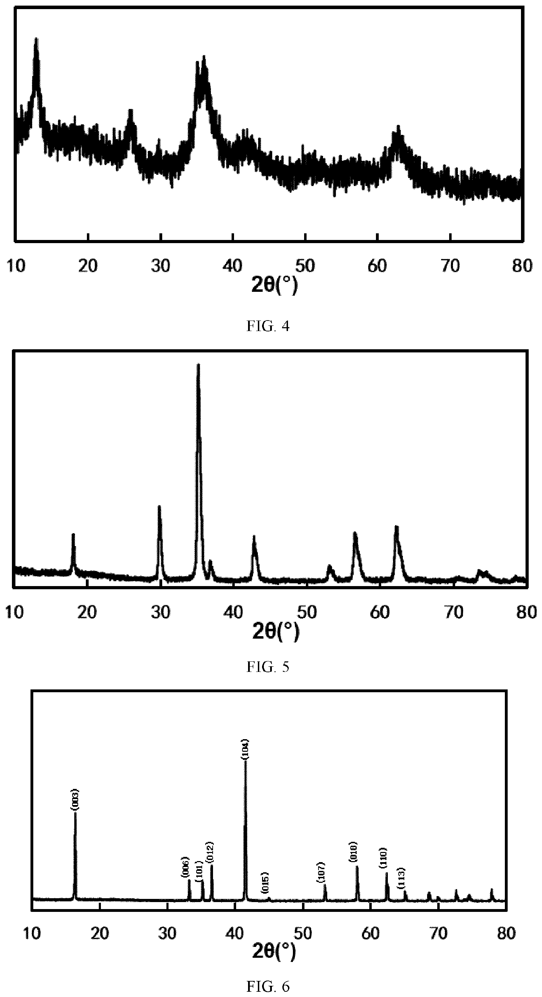

The present disclosure tested the X-Ray Diffraction (XRD) of the precursors, the pre-sintered precursors, and the O3-type monocrystal cathode material S1 in the Examples and Comparative Examples described above, and exemplarily provided the XRD images of the precursor, the pre-sintered precursor and the O3-type monocrystal cathode material S1 prepared in Example 1, the results were as shown in FIGs. 4-6, respectively. As illustrated by FIG. 4, the material phase of the precursor was $1/4(Ni_{0.2}Fe_{0.3}Mn_{0.4}Cu_{0.1})OOH@3/4(Ni_{0.2}Fe_{0.3}Mn_{0.4}Cu_{0.1})O_{4/3}$ compound phase; as shown from FIG. 5, the material phase of the pre-sintered precursor was $(Ni_{0.2}Fe_{0.3}Mn_{0.4}Cu_{0.1})_3O_4$ pure phase; as can be seen from FIG. 6, the material phase of the monocrystal cathode material S1 was sodium electron O3-type layered oxide $(Na_{0.96}Ni_{0.2}Fe_{0.3}Mn_{0.4}Cu_{0.1}O_2)$.

The O3-type monocrystal cathode material samples prepared and obtained in the above-mentioned Examples and Comparative Examples were simultaneously exposed to air having a relative humidity of 45% for 0-6h, the exact moisture, residual alkali, and XRD characteristic diffraction peak parameters were as shown in Table 2.

Water increment

$$\Delta(H_2O)=H_2O(t_x-t_0)/H_2O(t_0),\ 0h<t_x\leq6h,\ t_0=0h;$$

Residual alkali conversion rate

$$\Delta(Na_2CO_3+NaOH)=Na_2CO_3(t_x-t_0)/Na_2CO_3(t_0)+NaOH(t_x-t_0)/NaOH(t_0),\ 0h<t_x\leq6h,\ t_0=0h.$$

Table 2

|  | Example 1 | | | Example 2 | | |
|---|---|---|---|---|---|---|
| Time (h) | 0 | 1 | 6 | 0 | 1 | 6 |
| $H_2O$ (ppm) | 306 | 351 | 561 | 317 | 357 | 589 |
| $\Delta H_2O$ (%) | 0.0 | 14.7 | 83.3 | 0.0 | 12.6 | 85.8 |
| $Na_2CO_3$ (wt%) | 0.51 | 0.82 | 1.17 | 0.64 | 0.93 | 1.21 |
| NaOH (wt%) | 1.01 | 0.93 | 1.15 | 1.06 | 1.05 | 1.35 |
| $\Delta(Na_2CO_3+NaOH)$ (%) | 0.0 | 52.9 | 143.3 | 0.0 | 44.4 | 116.4 |
| $2\theta_{(003)}$ | 16.523 | 16.521 | 16.518 | 16.522 | 16.519 | 16.511 |

Table 2 (continued)

|  | Example 3 | | | Example 4 | | |
|---|---|---|---|---|---|---|
| Time (h) | 0 | 1 | 6 | 0 | 1 | 6 |
| $H_2O$ (ppm) | 308 | 353 | 577 | 299 | 353 | 566 |
| $\Delta H_2O$ (%) | 0.0 | 14.6 | 87.3 | 0.0 | 18.1 | 89.3 |

(continued)

|  | Example 3 | | | Example 4 | | |
|---|---|---|---|---|---|---|
| $Na_2CO_3$ (wt%) | 0.61 | 0.89 | 1.20 | 0.57 | 0.94 | 1.17 |
| NaOH (wt%) | 1.02 | 0.99 | 1.17 | 1.08 | 1.01 | 1.28 |
| $\Delta(Na_2CO_3+NaOH)$ (%) | 0.0 | 43.0 | 111.4 | 0.0 | 58.4 | 123.8 |
| $2\theta_{(003)}$ | 16.522 | 16.520 | 16.517 | 16.523 | 16.520 | 16.517 |

Table 2 (continued)

|  | Example 5 | | | Example 6 | | |
|---|---|---|---|---|---|---|
| Time (h) | 0 | 1 | 6 | 0 | 1 | 6 |
| $H_2O$ (ppm) | 301 | 376 | 593 | 301 | 347 | 566 |
| $\Delta H_2O$ (%) | 0.0 | 24.9 | 97.0 | 0.0 | 15.3 | 88.0 |
| $Na_2CO_3$ (wt%) | 0.79 | 0.98 | 1.51 | 0.54 | 0.88 | 1.16 |
| NaOH (wt%) | 1.07 | 1.05 | 1.35 | 1.08 | 0.91 | 1.21 |
| $\Delta(Na_2CO_3+NaOH)$ (%) | 0.0 | 22.2 | 117.3 | 0.0 | 47.2 | 126.9 |
| $2\theta_{(003)}$ | 16.522 | 16.521 | 16.516 | 16.520 | 16.518 | 16.515 |

Table 2 (continued)

|  |  |  |  | Example 7 | Example 8 |  |
|---|---|---|---|---|---|---|
| Time (h) | 0 | 1 | 6 | 0 | 1 | 6 |
| $H_2O$ (ppm) | 301 | 355 | 542 | 302 | 351 | 561 |
| $\Delta H_2O$ (%) | 0.0 | 17.9 | 80.1 | 0.0 | 16.2 | 85.8 |
| $Na_2CO_3$ (wt%) | 0.45 | 0.80 | 1.17 | 0.71 | 0.91 | 1.35 |
| NaOH (wt%) | 1.15 | 0.98 | 1.03 | 1.05 | 0.92 | 1.23 |
| $\Delta(Na_2CO_3+NaOH)$ (%) | 0.0 | 63.0 | 149.6 | 0.0 | 15.8 | 107.3 |
| $2\theta_{(003)}$ | 16.531 | 16.528 | 16.525 | 16.519 | 16.518 | 16.512 |

Table 2 (continued)

|  | Comparative Example 1 | | | Comparative Example 2 | | |
|---|---|---|---|---|---|---|
| Time (h) | 0 | 1 | 6 | 0 | 1 | 6 |
| $H_2O$ (ppm) | 326 | 655 | 1301 | 322 | 588 | 1207 |
| $\Delta H_2O$ (%) | 0.0 | 100.9 | 299.1 | 0.0 | 82.6 | 274.8 |
| $Na_2CO_3$ (wt%) | 0.60 | 1.51 | 2.96 | 0.65 | 1.55 | 2.91 |
| NaOH (wt%) | 1.02 | 1.71 | 1.85 | 1.05 | 1.85 | 1.99 |
| $\Delta(Na_2CO_3+NaOH)$ (%) | 0.0 | 219.3 | 474.7 | 0.0 | 214.7 | 437.2 |
| $2\theta_{(003)}$ | 16.521 | 16.513 | 16.501 | 16.519 | 16.515 | 16.501 |

Table 2 (continued)

|  | Comparative Example 3 | | | Comparative Example 4 | | |
|---|---|---|---|---|---|---|
| Time (h) | 0 | 1 | 6 | 0 | 1 | 6 |
| $H_2O$ (ppm) | 312 | 601 | 1101 | 311 | 593 | 1106 |
| $\Delta H_2O$ (%) | 0.0 | 92.6 | 252.9 | 0.0 | 90.7 | 255.6 |

(continued)

|  | Comparative Example 3 | | | Comparative Example 4 | | |
|---|---|---|---|---|---|---|
| Na$_2$CO$_3$ (wt%) | 0.67 | 1.56 | 2.86 | 0.69 | 1.48 | 2.84 |
| NaOH (wt%) | 1.08 | 1.92 | 2.16 | 1.07 | 1.62 | 1.99 |
| Δ(Na$_2$CO$_3$+NaOH) (%) | 0.0 | 210.6 | 426.9 | 0.0 | 165.9 | 397.6 |
| 2θ$_{(003)}$ | 16.519 | 16.515 | 16.496 | 16.520 | 16.517 | 16.498 |

Table 2 (continued)

|  | Comparative Example 5 | | | Comparative Example 6 | | |
|---|---|---|---|---|---|---|
| Time (h) | 0 | 1 | 6 | 0 | 1 | 6 |
| H$_2$O (ppm) | 313 | 554 | 873 | 301 | 567 | 1117 |
| ΔH$_2$O (%) | 0.0 | 77.0 | 178.9 | 0.0 | 88.4 | 271.1 |
| Na$_2$CO$_3$ (wt%) | 0.72 | 1.57 | 2.81 | 0.68 | 1.52 | 2.87 |
| NaOH (wt%) | 1.11 | 1.75 | 2.01 | 1.01 | 1.66 | 1.83 |
| Δ(Na$_2$CO$_3$+NaOH) (%) | 0.0 | 175.7 | 371.4 | 0.0 | 187.9 | 403.2 |
| 2θ$_{(003)}$ | 16.522 | 16.518 | 16.511 | 16.523 | 16.517 | 16.502 |

As can be seen from the data in Table 2, relative to the Comparative Examples 1-6, the cathode materials produced in Examples 1-8 with the preparation method provided by the present disclosure have less water absorption amounts in air, and the conversion quantities of Na$_2$CO$_3$ and NaOH are even less, there is less amount of de-intercalated Na resulting from the reaction of the cathode material with the air and carbon dioxide in air, and the change of interlayer spacing is smaller, such that the peak position shift forward of the characteristic diffraction peak A of (003) crystal plane is not obvious.

In comparison with Example 1, Comparative Example 1 adopts a technical solution of directly sintering the precursor, the produced cathode material has a larger water absorption in air, and the conversion quantities of the Na$_2$CO$_3$ and NaOH are relatively large.

As can be seen from the comparison results of Example 1 and Comparative Examples 2-6, the water increment and the residual alkali conversion rate of the cathode materials are regulated and controlled by adjusting the conditions of the sintering process (i.e., the sintering temperature, the temperature-rise rate, and the sintering time).

(3) Test of electrochemical properties

The present disclosure tested the electrochemical properties of the sodium ion battery cathode materials prepared in the aforementioned Examples and Comparative Examples, including the first charge specific capacity of 0.1C, the first discharge specific capacity of 0.1C, rate capability, cycle stability, and volume energy density, the specific test results were shown in Table 3.

Table 3

|  | First charge specific capacity, 0.1C/mAh/g | First discharge specific capacity, 0.1C/mAh/g | 1.0C/ 0.1C, % | Capacity retention rate after 80 charge and discharge cycles at 25°C, % | Volume energy density, Wh/L |
|---|---|---|---|---|---|
| Example 1 | 136.4 | 132.6 | 95.1 | 94.5 | 1459.3 |
| Example 2 | 132.3 | 129.5 | 94.5 | 93.9 | 1373.0 |
| Example 3 | 134.1 | 131.0 | 95.6 | 95.1 | 1372.2 |
| Example 4 | 132.1 | 129.1 | 94.2 | 93.2 | 1360.7 |
| Example 5 | 132.3 | 129.5 | 93.9 | 93.8 | 1348.1 |
| Example 6 | 136.2 | 132.5 | 94.8 | 94.1 | 1330.8 |

(continued)

|  | First charge specific capacity, 0.1C/mAh/g | First discharge specific capacity, 0.1C/mAh/g | 1.0C/ 0.1C, % | Capacity retention rate after 80 charge and discharge cycles at 25°C, % | Volume energy density, Wh/L |
|---|---|---|---|---|---|
| Example 7 | 132.5 | 129.8 | 94.7 | 94.5 | 1424.4 |
| Example 8 | 136.1 | 132.4 | 94.9 | 94.4 | 1305.2 |
| Comparative Example 1 | 132.4 | 129.1 | 92.1 | 86.1 | 1288.5 |
| Comparative Example 2 | 132.3 | 129.3 | 93.2 | 86.7 | 1286.7 |
| Comparative Example 3 | 130.3 | 126.5 | 92.5 | 87.1 | 1250.7 |
| Comparative Example 4 | 131.8 | 129.0 | 92.2 | 88.8 | 1275.6 |
| Comparative Example 5 | 130.9 | 128.1 | 92.4 | 89.5 | 1266.5 |
| Comparative Example 6 | 132.1 | 127.2 | 90.5 | 85.7 | 1289.4 |

As shown in data in Table 3, the present disclosure provides the sodium ion battery cathode materials, after the precursors are subjected to the sintering treatment with a specific sintering process, and in particular, the particle size distribution of the precursors is regulated and controlled to satisfy the condition $1 \leq (D_{90}-D_{10})/D_{50} \leq 1.5$, the obtained pre-sintered precursors have improved structural stability and reactivity; in addition, the cathode materials made from the pre-sintered precursors exhibit improved air stability and structural stability. The rate capability and the cycle stability of the sodium ion battery cathode material can be significantly improved, in particular, the compaction density and the volume energy density of the sodium ion cathode material can be further enhanced by further defining the average particle size $D_{50}$ and the particle size distribution $K_{90}$ of the precursor; moreover, the rate capability and the cycle stability of the sodium ion battery cathode material can be further improved by using the doped element.

It is apparent from the comparison results of Example 1 and Comparative Example 1 that after the precursor is subjected to the pre-sintering treatment, the produced cathode material has better rate capability and cycle stability. In other words, the pre-sintering scheme provided by the present disclosure is conducive to improving the structural stability and reactivity of the material; compared to the sodium-electron cathode material directly made from the precursor without subjecting to the pre-sintering treatment, the sodium-electron cathode material prepared in the present disclosure has excellent comprehensive properties combining the high capacity, high rate capacity, and long cycle stability.

The comparison results of Example 1 and Comparative Examples 2-3 show that the prepared cathode material has better rate capability, cycle stability, and air stability when the pre-sintering temperature falls within the preferred range.

As can be seen from the comparison between Example 1 and Comparative Example 4, when the pre-sintering time is within a preferred range, the structural stability of the sodium ion battery cathode material can be further enhanced, thereby improving the rate capability, cycle stability, and air stability of the sodium ion battery.

As can be seen from the comparison results of Example 1, Example 5, and Comparative Example 5, when the pre-sintering temperature-rise rate falls within the preferred range, the structural stability of the sodium ion battery cathode material can be further enhanced, thereby improving the rate capability, cycle stability, and air stability of the sodium ion battery.

The comparison result of Example 1 and Comparative Example 6 shows that the rate capability, cycle stability, and air stability of the sodium ion battery are more excellent after the precursor subjected to the two-stage temperature rise pre-sintering treatment, as compared to the precursor subjected to the one-stage temperature rise pre-sintering treatment.

As indicated by the comparison of test results of Example 1 and Example 3, the different kinds of doping elements in the sodium ion battery cathode material can further enhance the stability of the monocrystal structure, further improve the cycle stability and rate capability of the sodium ion battery cathode material.

As is apparent from the comparison of the test results of Example 1 and Example 8, when the particle size distribution of precursor is outside the preferred range, the compaction density of the prepared sodium ion battery cathode material will be significantly reduced, and the volumetric energy density is decreased.

As can be seen from the results of comparing the microcrystalline size ratio $D_A/D_B$ and the value of the lattice cell parameter c value of the Examples and Comparative Examples, the cathode materials prepared in the preferred conditions and ranges have a microcrystalline size ratio $D_A/D_B$ within the range of 1.3-2.5 and the c value selected from the range of 16-16.1 Å, and exhibit a superior rate capability and significantly improved air stability compared to the Comparative Examples.

**Claims**

1.  A sodium-ion battery cathode material, wherein in an XRD spectrogram of the cathode material, the characteristic diffraction peak A of (003) crystal plane and the characteristic diffraction peak B of (104) crystal plane are arranged at $2\theta$ of 15-19° and 39-44°, respectively;

    wherein the microcrystalline size $D_A$ of the characteristic diffraction peak A and the microcrystalline size $D_B$ of the characteristic diffraction peak B satisfy the following condition: $1.3 \leq D_A/D_B \leq 2.5$, wherein $D_A$ and $D_B$ correspond to the microcrystalline sizes of the (003) crystal plane and the (104) crystal plane in the perpendicular line direction, respectively; wherein the microcrystalline size refers to the vertical distance from the crystal plane to the microcrystalline center;
    wherein the cathode material has an O3-type monocrystal structure, and the c value is selected from the range of 16-16.1 Å;
    wherein the cathode material has the composition represented by formula I:

    $$Na_a(Ni_xFe_yMn_zM_mM'_n)O_2 \qquad (I),$$

    in formula I, $0.93 \leq a \leq 1.03$, $0 < x < 0.5$, $0 < y < 0.5$, $0 < z \leq 0.5$, $0 < m < 0.5$, $0 \leq n \leq 0.2$, $0.05 < m+n < 0.5$, m and n are not simultaneously 0, $x+y+z+m+n=1$; M and M' are each independently at least one element selected from the group consisting of Li, Cu, V, Cr, Sn, Zn, Al, Zr, Sr, Nb, Y, W, and La.

2.  The cathode material according to claim 1, wherein

    in an XRD spectrogram of the cathode material, the characteristic diffraction peak A has an angle $2\theta$ within the range of $16.5 \pm 1°$, and the characteristic diffraction peak B has an angle $2\theta$ within the range of $41.5 \pm 1°$;
    and/or, the microcrystalline size $D_A$ of the characteristic diffraction peak A and the microcrystalline size $D_B$ of the characteristic diffraction peak B satisfy the following condition: $1.3 \leq D_A/D_B \leq 2$.

3.  The cathode material according to claims 1 or 2, wherein

    in formula I, M is at least one element selected from the group consisting of Cu, V, Cr, Sn, Zn, Al, Zr, Nb, Y, W, and La, and M' is at least one element selected from the group consisting of Li, Al, Zr, Sr, La, Nb, and W;
    further preferably, M and M' are different.

4.  The cathode material according to any one of claims 1-3, wherein an average partice size $D_{50}$ of the cathode material is within the range of 7-20$\mu$m, preferably within the range of 8-16$\mu$m, more preferably within the range of 9-12$\mu$m;

    and/or, the particle size distribution of the cathode material satisfies the following condition: $1.2 \leq (D_{90}-D_{10})/D_{50} \leq 1.8$, preferably $1.4 \leq (D_{90}-D_{10})/D_{50} \leq 1.6$;
    and/or, the compaction density of the cathode material is within the range of 3-3.6g/cm$^3$, preferably within the range of 3.3-3.6g/cm$^3$;
    and/or, the water increment of the cathode material satisfies the following condition:

    $0\% \leq \Delta(H_2O) \leq 120\%$, wherein $\Delta(H_2O)=H_2O(t_x-t_0)/H_2O(t_0)$, $0h < t_x \leq 6h$, to=0h; preferably $0\% \leq \Delta(H_2O) \leq 100\%$;
    wherein the water increment represents the change rate of water content before and after the cathode material is exposed to air having a relative humidity of 45% for 0-6h;
    and/or, the residual alkali conversion rate of the cathode material satisfies the following condition: $0\% \leq \Delta(Na_2CO_3+NaOH) \leq 200\%$,
    wherein $\Delta(Na_2CO_3+NaOH)=Na_2CO_3(t_x-t_0)/Na_2CO_3(t_0)+NaOH(t_x-t_0)/NaOH(t_0)$, $0h < t_x \leq 6h$, $t_0=0h$; preferably $0\% \leq \Delta(Na_2CO_3+NaOH) \leq 150\%$;
    wherein the residual alkali conversion rate represents the change rate of residual alkali content before and after the cathode material is exposed to air having a relative humidity of 45% for 0-6h.

5.  A method of preparing the sodium ion battery cathode material according to any one of claims 1-4, comprising the following steps:

    (1) pre-sintering a precursor having the composition represented by formula (II) $Ni_\alpha Fe_\beta Mn_\gamma M_\delta O_a H_b$ to obtain a pre-sintered precursor;

(2) mixing and calcinating the pre-sintered precursor, a Na source, and an optional M'-containing dopant to obtain a cathode material; wherein M and M' in the cathode material are not simultaneously 0;

wherein in formula II, $0<\alpha\leq0.5$, $0<\beta\leq0.5$, $0<\gamma\leq0.5$, $0\leq\delta\leq0.5$, $1\leq a\leq2$, $0\leq b\leq2$, $\alpha+\beta+\gamma+\delta=1$, M and M' are each independently at least one element selected from the group consisting of Li, Cu, V, Cr, Sn, Zn, Al, Zr, Sr, Nb, Y, W, and La;

wherein the pre-sintering process comprises first temperature rise stage, second temperature rise stage and heat preservation stage, the conditions of the first temperature rise stage comprise: raising the temperature to $T_1$ at a temperature-rise rate $v_1$ in an oxygen-depleted atmosphere having an oxygen concentration less than or equal to 10 vol%; the conditions of the second temperature rise stage comprise: raising the temperature to $T_2$ at a temperature-rise rate $v_2$ in an oxygen-depleted atmosphere having an oxygen concentration less than or equal to 20 vol%; the conditions of the heat preservation stage comprise: preserving heat within the temperature range of $(T_2-10)\leq T\leq(T_2+10)$ for a time t; wherein $v_1$ is selected from the range of 5-10°C/min, $v_2$ is selected from the range of 1-3°C/min, $T_1$ is selected from the range of 200-300°C, $T_2$ is selected from the range of 450-750°C; t is selected from the range of 3-10h.

6. The method according to claim 5, wherein in step (1), an average partice size $D_{50}$ of the precursor is within the range of 7.5-8.5$\mu$m, and the particle size distribution satisfies the following condition: $1\leq(D_{90}-D_{10})/D_{50}\leq1.5$;

and/or, the precursor has a tap density within the range of 0.7-1.5g/cm$^3$ and a specific surface area within the range of 30-100m$^2$/g;

and/or, the precursor is produced with the following method: subjecting a mixed metal salt solution containing a Ni source, a Fe source, a Mn source, and an M source, a precipitant solution, and a complexing agent solution to co-precipitation reaction in a non-oxidizing atmosphere to obtain the precursor;

and/or, the precursor and the pre-sintered precursor each independently have a spherical structure.

7. The method according to claim 5 or 6, wherein in step (2), the used amounts of the pre-sintered precursor and the Na source satisfy the condition n(Ni+Fe+Mn+M):n(Na)=(0.93-1.03): 1;

and/or, the used amount of component C satisfies the condition:

n(M'):n(Ni+Fe+Mn+M+M')=(0-0.2): 1;

and/or, the dopant is at least one selected from the group consisting of oxides, phosphates, carbonates, fluorides, chlorides, hydroxides, and silicides that contain the M' element, preferably is at least one selected from the group consisting of $Li_2CO_3$, $Al_2O_3$, $AlPO_4$, $AlCl_3$, $ZrO$, $Zr(HPO_4)_2$, $ZrSi_2$, $Sr(OH)_2$, $SrCO_3$, $SrSi_2$, $SrF_2$, $SrCl_2$, $La_2O_3$, $Nb_2O_5$, and $WO_3$.

8. The method according to any one of claims 5-7, wherein in step (2), the calcination conditions comprise: a temperature selected from the range of 900-1,100°C; a time selected from the range of 5-15h;

and/or, the calcination process comprises temperature rise stage I, temperature rise stage II, and constant temperature stage, the difference between the oxygen concentration in the atmosphere of the temperature rise stage II and the oxygen concentration in the atmosphere of the temperature rise stage I is within the range of 10-100vol%, and the difference between the temperature-rise rate of the temperature rise stage I and the temperature rise rate of the temperature rise stage II is within the range of 2-15°C/min; preferably, the conditions of the temperature rise stage I comprise: raising the temperature to $T_1'$ at a temperature-rise rate $v_1'$ in an oxygen-depleted atmosphere having an oxygen concentration less than or equal to 10 vol%; the conditions of the temperature rise stage II comprise: raising the temperature to $T_2'$ at a temperature-rise rate $v_2'$ in an atmosphere having an oxygen concentration larger than or equal to 20 vol%; the conditions of the constant temperature stage comprise: preserving heat within the temperature range of $(T_2'-10)\leq T'\leq(T_2'+10)$ for a time t'; wherein $v_1'\geq3$°C/min, $v_2'\leq1$°C/min, $T_1'$ is selected from the range of 600-800°C, $T_2'$ is selected from the range of 900-1,100°C; t' is selected from the range of 5-15h.

9. A sodium ion battery, wherein the sodium ion battery comprises the cathode material according to any one of claims 1-4, or the cathode material produced with the method according to any one of claims 5-8.

**Patentansprüche**

1. Kathodenmaterial für eine Natrium-Ionen-Batttterie, wobei in einem XRD-Spektrogramm des Kathodenmaterials der charakteristische Beugungspeak A der (003)-Kristallebene und der charakteristische Beugungspeak B der (104)-Kristallebene bei $2\theta$ von 15-19° bzw. 39-44° angeordnet sind;

   wobei die Mikrokristallgröße $D_A$ des charakteristischen Beugungspeaks A und die Mikrokristallgröße $D_B$ des charakteristischen Beugungspeaks B die folgende Bedingung erfüllen: $1,3 \leq D_A/D_B \leq 2,5$, wobei $D_A$ und $D_B$ den Mikrokristallgrößen der (003)-Kristallebene bzw. der (104)-Kristallebene in senkrechter Linienrichtung entsprechen;
   wobei die Mikrokristallgröße den vertikalen Abstand von der Kristallebene zum Mikrokristallmittelpunkt bezeichnet;
   wobei das Kathodenmaterial eine Monokristallstruktur vom O3-Typ aufweist und der c-Wert aus dem Bereich von 16-16,1 Å ausgewählt ist;
   wobei das Kathodenmaterial die durch die Formel I dargestellte Zusammensetzung aufweist:

   $$Na_a(Ni_xFe_yMn_zM_mM'_n)O_2 \qquad (I),$$

   wobei in Formel I $0,93 \leq a \leq 1,03$, $0 < x \leq 0,5$, $0 < y \leq 0,5$, $0 < z \leq 0,5$, $0 \leq m \leq 0,5$, $0 \leq n \leq 0,2$, $0,05 \leq m + n \leq 0,5$, m und n nicht gleichzeitig 0 sind, $x + y + z + m + n = 1$; M und M' jeweils unabhängig voneinander mindestens ein Element ausgewählt aus der Gruppe bestehend aus Li, Cu, V, Cr, Sn, Zn, Al, Zr, Sr, Nb, Y, W und La sind.

2. Kathodenmaterial nach Anspruch 1, wobei

   in einem XRD-Spektrogramm des Kathodenmaterials die charakteristische Beugungspeak A einen Winkel $2\theta$ im Bereich von $16,5 \pm 1°$ aufweist und die charakteristische Beugungspeak B einen Winkel $2\theta$ im Bereich von $41,5 \pm 1°$ aufweist;
   und/oder die Mikrokristallgröße $D_A$ des charakteristischen Beugungspeaks A und die Mikrokristallgröße $D_B$ des charakteristischen Beugungspeaks B die folgende Bedingung erfüllen: $1,3 \leq D_A/D_B \leq 2$.

3. Kathodenmaterial nach Anspruch 1 oder 2, wobei

   in Formel I M mindestens ein Element ausgewählt aus der Gruppe bestehend aus Cu, V, Cr, Sn, Zn, Al, Zr, Nb, Y, W und La ist, und M' mindestens ein Element ausgewählt aus der Gruppe bestehend aus Li, Al, Zr, Sr, La, Nb und W ist;
   ferner bevorzugt M und M' unterschiedlich sind.

4. Kathodenmaterial nach irgendeinem der Ansprüche 1-3, wobei eine durchschnittliche Partikelgröße $D_{50}$ des Kathodenmaterials im Bereich von 7-20 $\mu$m, bevorzugt im Bereich von 8-16 $\mu$m, besonders bevorzugt im Bereich von 9-12 $\mu$m liegt;

   und/oder die Partikelgrößenverteilung des Kathodenmaterials die folgende Bedingung erfüllt: $1,2 \leq (D_{90} - D_{10})/D_{50} \leq 1,8$, bevorzugt $1,4 \leq (D_{90} - D_{10})/D_{50} \leq 1,6$;
   und/oder die Verdichtungsdichte des Kathodenmaterials im Bereich von 3-3,6 g/cm$^3$, bevorzugt im Bereich von 3,3-3,6 g/cm$^3$ liegt;
   und/oder die Wasserzunahme des Kathodenmaterials die folgende Bedingung erfüllt: $0 \% \leq \Delta(H_2O) \leq 120 \%$, wobei $\Delta (H_2O) = H_2O(t_x - to) /H_2O(t_0)$, $0 h < t_x \leq 6 h$, $t_0 = 0 h$; bevorzugt $0 \% < 0 \% \leq \Delta(H_2O) \leq 100 \%$;
   wobei die Wasserzunahme die Änderungsrate des Wassergehalts vor und nach der Einwirkung von Luft mit einer relativen Feuchtigkeit von 45 % für 0-6 h auf das Kathodenmaterial darstellt;
   und/oder die Restalkaliumwandlungsrate des Kathodenmaterials die folgende Bedingung erfüllt: $0 \% \leq \Delta (Na_2CO_3 + NaOH) \leq 200 \%$,
   wobei $\Delta(Na_2CO_3 + NaOH) = Na_2CO_3(t_x - t_0)/Na_2CO_3(t_0) + NaOH (t_x - t_0)/NaOH (to)$, $0 h \leq t_x \leq 6 h$, to = 0 h; bevorzugt $0 \% \leq \Delta (Na_2CO_3 + NaOH) \leq 150 \%$;
   wobei die Restalkaliumwandlungsrate die Änderungsrate des Restalkaligehalts vor und nach der Einwirkung von Luft mit einer relativen Feuchtigkeit von 45 % für 0-6 h auf das Kathodenmaterial darstellt.

5. Verfahren zur Herstellung des Kathodenmaterial für eine Natrium-Ionen-Battterie gemäß irgendeinem der Ansprüche 1-4, umfassend die folgenden Schritte:

(1) Vorsintern eines Vorläufers mit der durch die Formel (II) $Ni_\alpha Fe_\beta Mn_\gamma M_\delta O_a H_b$ dargestellten Zusammensetzung, um einen vorgesinterten Vorläufer zu erhalten;

(2) Mischen und Kalzinieren des vorgesinterten Vorläufers, einer Na-Quelle und eines optionalen M'-haltigen Dotierungsmittels, um ein Kathodenmaterial zu erhalten; wobei M und M' im Kathodenmaterial nicht gleichzeitig 0 sind;

wobei in Formel II $0 < \alpha \leq 0,5$, $0 < \beta \leq 0,5$, $0 < \gamma \leq 0,5$, $0 \leq \delta \leq 0,5$, $1 \leq a \leq 2$, $0 \leq b \leq 2$, $\alpha + \beta + \gamma + \delta = 1$, M und M' jeweils unabhängig voneinander mindestens ein Element ausgewählt aus der Gruppe bestehend aus Li, Cu, V, Cr, Sn, Zn, Al, Zr, Sr, Nb, Y, W und La sind;

wobei der Vorsinterprozess eine erste Temperaturanstiegsstufe, eine zweite Temperaturanstiegsstufe und eine Wärmehaltestufe umfasst, wobei die Bedingungen der ersten Temperaturanstiegsstufe Folgendes umfassen: Anheben der Temperatur auf $T_1$ mit einer Temperaturanstiegsrate $v_1$ in einer sauerstoffarmen Atmosphäre mit einer Sauerstoffkonzentration von weniger als oder gleich 10 Vol.-%; die Bedingungen der zweiten Temperaturanstiegsstufe Folgendes umfassen: Anheben der Temperatur auf $T_2$ mit einer Temperaturanstiegsrate $v_2$ in einer sauerstoffarmen Atmosphäre mit einer Sauerstoffkonzentration von weniger als oder gleich 20 Vol.-%; die Bedingungen der Wärmehaltestufe Folgendes umfassen: Erhalten der Wärme innerhalb des Temperaturbereichs $(T_2 - 10) \leq T \leq (T_2 + 10)$ für eine Zeit t; wobei $v_1$ aus dem Bereich von 5-10 °C/min ausgewählt ist, $v_2$ aus dem Bereich von 1-3 °C/min ausgewählt ist, $T_1$ aus dem Bereich von 200-300 °C ausgewählt ist, $T_2$ aus dem Bereich von 450-750 °C ausgewählt ist; t aus dem Bereich von 3-10 h ausgewählt ist.

6. Verfahren nach Anspruch 5, wobei in Schritt (1) eine durchschnittliche Partikelgröße $D_{50}$ des Vorläufers im Bereich von 7,5-8,5 $\mu$m liegt und die Partikelgrößenverteilung die folgende Bedingung erfüllt: $1 \leq (D_{90} - D_{10})/D_{50} \leq 1,5$;

und/oder der Vorläufer eine Schüttdichte im Bereich von 0,7-1,5 $g/cm^3$ und eine spezifische Oberfläche im Bereich von 30-100 $m^2/g$ aufweist;

und/oder der Vorläufer mit dem folgenden Verfahren hergestellt wird: Aussetzen einer gemischten Metallsalzlösung, die eine Ni-Quelle, eine Fe-Quelle, eine Mn-Quelle und eine M-Quelle enthält, einer Fällungslösung und einer Komplexbildnerlösung einer Copräzipitationsreaktion in einer nicht oxidierenden Atmosphäre, um den Vorläufer zu erhalten;

und/oder der Vorläufer und der vorgesinterte Vorläufer jeweils unabhängig voneinander eine sphärische Struktur aufweisen.

7. Verfahren nach Anspruch 5 oder 6, wobei in Schritt (2) die verwendeten Mengen des vorgesinterten Vorläufers und der Na-Quelle die Bedingung n(Ni + Fe + Mn + M):n(Na) = (0,93 - 1,03):1 erfüllen;

und/oder die verwendete Menge der Komponente C die Bedingung n(M'):n(Ni + Fe + Mn + M + M') = (0 - 0,2):1 erfüllt;

und/oder der Dotierstoff mindestens eines ausgewählt aus der Gruppe bestehend aus Oxiden, Phosphaten, Carbonaten, Fluoriden, Chloriden, Hydroxiden und Siliziden ist, die das Element M' enthalten, bevorzugt mindestens eines ausgewählt aus der Gruppe bestehend aus $Li_2CO_3$, $Al_2O_3$, $AlPO_4$, $AlCl_3$, ZrO, $Zr(HPO_4)_2$, $ZrSi_2$, $Sr(OH)_2$, $SrCO_3$, $SrSi_2$, $SrF_2$, $SrCl_2$, $La_2O_3$, $Nb_2O_5$ und $WO_3$ ist.

8. Verfahren nach irgendeinem der Ansprüche 5-7, wobei in Schritt (2) die Kalzinierungsbedingungen Folgendes umfassen: eine Temperatur, die aus dem Bereich von 900-1100 °C ausgewählt ist; eine Zeit, die aus dem Bereich von 5-15 h ausgewählt ist;

und/oder der Kalzinierungsprozess eine Temperaturanstiegsstufe I, eine Temperaturanstiegsstufe II und eine Konstanttemperaturstufe umfasst, wobei die Differenz zwischen der Sauerstoffkonzentration in der Atmosphäre der Temperaturanstiegsstufe II und der Sauerstoffkonzentration in der Atmosphäre der Temperaturanstiegsstufe I im Bereich von 10-100 Vol.-% liegt und die Differenz zwischen der Temperaturanstiegsrate der Temperaturanstiegsstufe I und der Temperaturanstiegsrate der Temperaturanstiegsstufe II im Bereich von 2-15 °C/min liegt; wobei bevorzugt die Bedingungen der Temperaturanstiegsstufe I Folgendes umfassen: Anheben der Temperatur auf $T_1$' mit einer Temperaturanstiegsrate $v_1$' in einer sauerstoffarmen Atmosphäre mit einer Sauerstoffkonzentration von weniger als oder gleich 10 Vol.-%;

die Bedingungen der Temperaturanstiegsstufe II Folgendes umfassen: Anheben der Temperatur auf $T_2$' mit einer Temperaturanstiegsrate $v_2$' in einer Atmosphäre mit einer Sauerstoffkonzentration von größer als oder gleich 20 Vol.-%; die Bedingungen der Konstanttemperaturstufe Folgendes umfassen: Erhalten der Wärme innerhalb des

Temperaturbereichs $(T_2' - 10) \leq T' \leq (T_2' + 10)$ für eine Zeit t'; wobei $v_1' \geq 3$ °C/min, $v_2' \leq 1$ °C/min, $T_1'$ aus dem Bereich von 600-800 °C ausgewählt ist, $T_2'$ aus dem Bereich von 900-1100 °C ausgewählt ist; t' aus dem Bereich von 5-15 h ausgewählt ist.

9. Natrium-Ionen-Batterie, wobei die Natrium-Ionen-Batterie das Kathodenmaterial gemäß irgendeinem der Ansprüche 1-4 oder das Kathodenmaterial, das mit dem Verfahren gemäß irgendeinem der Ansprüche 5-8 hergestellt wurde, umfasst.

**Revendications**

1. Matériau de cathode de batterie sodium-ion, dans lequel, dans un spectrogramme XRD du matériau de cathode, le pic de diffraction caractéristique A du plan cristallin (003) et le pic de diffraction caractéristique B du plan cristallin (104) sont disposés à 2θ de 15 à 19° et 39 à 44°, respectivement ;

   dans lequel la taille microcristalline $D_A$ du pic de diffraction caractéristique A et la taille microcristalline $D_B$ du pic de diffraction caractéristique B satisfont la condition suivante : $1{,}3 \leq D_A/D_B \leq 2,5$, dans lequel $D_A$ et $D_B$ correspondent respectivement aux tailles microcristallines du plan cristallin (003) et du plan cristallin (104) dans la direction de ligne perpendiculaire ; dans lequel la taille microcristalline fait référence à la distance verticale du plan cristallin au centre microcristallin ;
   dans lequel le matériau de cathode a une structure monocristalline de type O3, et la valeur c est choisie dans la plage de 16 à 16,1 Å ;
   dans lequel le matériau de cathode a la composition représentée par la formule I : $Na_a(Ni_xFe_yMn_zM_mM'_n)O_2$ (I), dans la formule I, $0{,}93 \leq a \leq 1{,}03$, $0 < x \leq 0{,}5$, $0 < y \leq 0{,}5$, $0 < z \leq 0{,}5$, $0 \leq m \leq 0{,}5$, $0 \leq n \leq 0{,}2$, $0{,}05 \leq m+n \leq 0{,}5$, m et n ne sont pas simultanément égaux à 0, x+y+z+m+n=1 ; M et M' sont chacun indépendamment au moins un élément choisi dans le groupe constitué par Li, Cu, V, Cr, Sn, Zn, Al, Zr, Sr, Nb, Y, W, et La.

2. Matériau de cathode selon la revendication 1, dans lequel

   dans un spectrogramme XRD du matériau de cathode, le pic de diffraction caractéristique A a un angle 2θ dans la plage de $16{,}5 \pm 1°$, et le pic de diffraction caractéristique B a un angle 2θ dans la plage de $41{,}5 \pm 1°$ ;
   et/ou, la taille microcristalline $D_A$ du pic de diffraction caractéristique A et la taille microcristalline $D_B$ du pic de diffraction caractéristique B satisfont la condition suivante : $1{,}3 \leq D_A/D_B \leq 2$.

3. Matériau de cathode selon les revendications 1 ou 2, dans lequel

   dans la formule I, M est au moins un élément choisi dans le groupe constitué par Cu, V, Cr, Sn, Zn, Al, Zr, Nb, Y, W, et La, et M' est au moins un élément choisi dans le groupe constitué par Li, Al, Zr, Sr, La, Nb, et W ;
   de préférence encore, M et M' sont différents.

4. Matériau de cathode selon l'une quelconque des revendications 1 à 3, dans lequel une taille moyenne de particules $D_{50}$ du matériau de cathode est comprise dans la plage de 7 à 20 μm, de préférence dans la plage de 8 à 16 μm, plus préférablement dans la plage de 9 à 12 μm ;

   et/ou, la distribution granulométrique du matériau de cathode satisfait la condition suivante : $1{,}2 \leq (D_{90}-D_{10})/D_{50} \leq 1{,}8$, de préférence $1{,}4 \leq (D_{90}-D_{10})/D_{50} \leq 1{,}6$ ;
   et/ou, la masse volumique de compactage du matériau de cathode est comprise dans la plage de 3 à 3,6 g/cm³, de préférence dans la plage de 3,3 à 3,6 g/cm³ ;
   et/ou, l'incrément d'eau du matériau de cathode satisfait la condition suivante : $0\% \leq \Delta(H_2O) \leq 120\%$, dans lequel $\Delta(H_2O) = H_2O(t_x-t_0)/H_2O(t_0)$, $0h \leq t_x \leq 6h$, $t_0 = 0h$ ; de préférence $0\% \leq \Delta(H_2O) \leq 100\%$ ;
   dans lequel l'incrément d'eau représente le taux de changement de la teneur en eau avant et après que le matériau de la cathode soit exposé à de l'air ayant une humidité relative de 45 % pendant 0 à 6 h ;
   et/ou, le taux de conversion alcaline résiduelle du matériau de cathode satisfait la condition suivante : $0\% \leq \Delta(Na_2CO_3+NaOH) \leq 200\%$,
   dans lequel $\Delta(Na_2CO_3+NaOH) = Na_2CO_3(t_x-t_0)/Na_2CO_3(t_0)+NaOH(t_x-t_0)/NaOH(t_0)$, $0h < t_x \leq 6h$, to=0h ; de préférence $0\% \leq \Delta(Na_2CO_3+NaOH) \leq 150\%$ ;
   dans lequel le taux de conversion alcalin résiduel représente le taux de changement de la teneur en alcalin résiduel avant et après que le matériau de cathode soit exposé à de l'air ayant une humidité relative de 45 % pendant 0 à 6 h.

**5.** Procédé de préparation du matériau de cathode de batterie sodium-ion selon l'une quelconque des revendications 1 à 4, comprenant les étapes suivantes :

(1) le préfrittage d'un précurseur ayant la composition représentée par la formule (II) $Ni_\alpha Fe_\beta Mn_\gamma M_\delta O_a H_b$ pour obtenir un précurseur préfritté ;

(2) le mélange et la calcination du précurseur pré-fritté, d'une source de Na, et d'un dopant contenant M' facultatif pour obtenir un matériau de cathode ; dans lequel M et M' dans le matériau de cathode ne sont pas simultanément 0 ;

dans lequel dans la formule II, $0<\alpha\leq0,5$, $0<\beta\leq0,5$, $0<\gamma\leq0,5$, $0\leq\delta\leq0,5$, $1\leq a\leq2$, $0\leq b\leq2$, $\alpha+\beta+\gamma+\delta=1$, M et M' sont chacun indépendamment au moins un élément choisi dans le groupe constitué de Li, Cu, V, Cr, Sn, Zn, Al, Zr, Sr, Nb, Y, W et La ;

dans lequel le procédé de préfrittage comprend une première étape d'élévation de température, une seconde étape d'élévation de température et une étape de conservation de la chaleur, les conditions de la première étape d'élévation de température comprennent : l'élévation de la température à $T_1$ à une vitesse d'élévation de température $V_1$ dans une atmosphère appauvrie en oxygène ayant une concentration en oxygène inférieure ou égale à 10 % en vol ; les conditions de la seconde étape d'élévation de température comprennent :

l'élévation de la température à $T_2$ à une vitesse d'élévation de température $v_2$ dans une atmosphère appauvrie en oxygène ayant une concentration en oxygène inférieure ou égale à 20 % en vol ; les conditions de l'étape de conservation de la chaleur comprennent : la conservation de la chaleur dans la plage de température de $(T_2-10)\leq T \leq (T_2+10)$ pendant une durée t ; dans lequel $V_1$ est choisi dans la plage de 5 à 10 °C/min, $V_2$ est choisi dans la plage de 1 à 3 °C/min, $T_1$ est choisi dans la plage de 200 à 300 °C, $T_2$ est choisi dans la plage de 450 à 750 °C ; t est choisi dans la plage de 3 à 10 h.

**6.** Procédé selon la revendication 5, dans lequel, à l'étape (1), une taille moyenne de particules $D_{50}$ du précurseur est comprise dans une plage de 7,5 et 8,5 $\mu$m, et la distribution granulométrique satisfait la condition suivante : $1\leq(D_{90}-D_{10})/D_{50}\leq1,5$ ;

et/ou, le précurseur a une masse volumique tassée dans la plage de 0,7 à 1,5 $g/cm^3$ et une surface spécifique dans la plage de 30 à 100 $m^2/g$ ;

et/ou, le précurseur est produit avec le procédé suivant : la soumission d'une solution de sel métallique mixte contenant une source de Ni, une source de Fe, une source de Mn, et une source de M, une solution de précipitant, et une solution d'agent complexant à une réaction de coprécipitation dans une atmosphère non oxydante pour obtenir le précurseur ;

et/ou, le précurseur et le précurseur pré-fritté ont chacun indépendamment une structure sphérique.

**7.** Procédé selon la revendication 5 ou 6, dans lequel, à l'étape (2), les quantités utilisées du précurseur préfritté et de la source de Na satisfont à la condition n(Ni+Fe+Mn+M):n(Na)=(0,93-1,03):1 ;

et/ou, la quantité utilisée du composant C satisfait la condition : n(M'):n(Ni+Fe+Mn+M+M')=(0-0,2):1 ;

et/ou, le dopant est au moins un élément choisi dans le groupe constitué par les oxydes, les phosphates, les carbonates, les fluorures, les chlorures, les hydroxydes, et les siliciures qui contiennent l'élément M', de préférence est au moins un élément choisi dans le groupe constitué par $Li_2CO_3$, $Al_2O_3$, $AlPO_4$, $AlCl_3$, ZrO, $Zr(HPO_4)_2$, $ZrSi_2$, $Sr(OH)_2$, $SrCO_3$, $SrSi_2$, $SrF_2$, $SrCl_2$, $La_2O_3$, $Nb_2O_5$ et $WO_3$.

**8.** Procédé selon l'une quelconque des revendications 5 à 7, dans lequel, à l'étape (2), les conditions de calcination comprennent : une température choisie dans la plage de 900 à 1 100 °C ; une durée choisie dans la plage de 5 à 15 h ;

et/ou, le procédé de calcination comprend une étape d'élévation de température I, une étape d'élévation de température II, et une étape à température constante, la différence entre la concentration en oxygène dans l'atmosphère de l'étape d'élévation de température II et la concentration en oxygène dans l'atmosphère de l'étape d'élévation de température I est comprise dans la plage de 10 à 100 % en volume, et la différence entre la vitesse d'élévation de température de l'étape d'élévation de température I et la vitesse d'élévation de température de l'étape d'élévation de température II est comprise dans la plage de 2 à 15 °C/min ;

de préférence, les conditions de l'étape d'élévation de température I comprennent : l'élévation de la température

jusqu'à $T_1$' à une vitesse d'élévation de température $V_1$' dans une atmosphère appauvrie en oxygène ayant une concentration en oxygène inférieure ou égale à 10 % en vol ;

les conditions de l'étape II d'élévation de température comprennent : l'élévation de la température jusqu'à $T_2$' à une vitesse d'élévation de température $V_2$' dans une atmosphère ayant une concentration en oxygène supérieure ou égale à 20 % en vol ; les conditions de l'étape à température constante comprennent : le maintien de la chaleur dans la plage de température de $(T_2'-10) \leq T' \leq (T_2'+10)$ pendant un temps t' ; dans lequel $V_1' \geq 3$ °C/min, $V_2' \leq 1$ °C/min, $T_1$' est choisi dans la plage de 600 à 800 °C, $T_2$' est choisi dans la plage de 900 à 1 100 °C ; t' est choisi dans la plage de 5 à 15 h.

9. Batterie sodium-ion, dans laquelle la batterie sodium-ion comprend le matériau de cathode selon l'une quelconque des revendications 1 à 4, ou le matériau de cathode produit avec le procédé selon l'une quelconque des revendications 5 à 8.

FIG. 1

FIG. 2

FIG. 3

FIG. 4

FIG. 5

FIG. 6

**EP 4 516 744 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311117897
- CN 114843498 A
- US 2023238518 A1
- US 2016293945 A1